(19) Europäisches Patentamt
European Patent Office
Office européen des brevets

(11) EP 3 853 334 B1

(12) **EUROPÄISCHE PATENTSCHRIFT**

(45) Veröffentlichungstag und Bekanntmachung des Hinweises auf die Patenterteilung:
**14.12.2022 Patentblatt 2022/50**

(21) Anmeldenummer: **18773169.0**

(22) Anmeldetag: **19.09.2018**

(51) Internationale Patentklassifikation (IPC):
***C11D 3/37*** (2006.01) ***C08G 77/14*** (2006.01)
***C08G 77/26*** (2006.01) ***C08G 77/46*** (2006.01)
***C08L 83/08*** (2006.01) ***C08L 83/12*** (2006.01)

(52) Gemeinsame Patentklassifikation (CPC):
**C11D 3/3738; C08L 83/08; C08L 83/12;**
**C11D 3/3742;** C08G 77/26; C08G 77/46

(86) Internationale Anmeldenummer:
**PCT/EP2018/075323**

(87) Internationale Veröffentlichungsnummer:
**WO 2019/057754 (28.03.2019 Gazette 2019/13)**

(54) **LAGERSTABILE KONZENTRATE ENTHALTEND POLYSILOXANE UND DEREN EINSATZ VORZUGSWEISE IN TEXTIL-PFLEGENDEN ZUSAMMENSETZUNGEN**

CONCENTRATES CONTAINING POLYSILOXANES STABLE UNDER STORAGE CONDITIONS AND THEIR USE PREFERABLY IN TEXTILE CARE COMPOSITIONS

CONTENANTS DE STOCKAGE CONTENANT DU POLYSILOXANE ET LEUR UTILISATION DANS DES COMPOSITIONS PRÉFÉRÉES DE SOINS TEXTILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2017 EP 17192823**

(43) Veröffentlichungstag der Anmeldung:
**28.07.2021 Patentblatt 2021/30**

(73) Patentinhaber: **Evonik Operations GmbH**
**45128 Essen (DE)**

(72) Erfinder:
- **TRAMBITAS, Alexandra**
**63755 Alzenau (DE)**
- **DAHL, Verena**
**51429 Bergisch Gladbach (DE)**
- **VENZMER, Joachim**
**45239 Essen (DE)**
- **HILDEBRAND, Jens**
**63867 Johannesberg (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 557 107** **EP-A2- 2 444 447**
**WO-A1-02/088456** **WO-A1-2008/040785**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 853 334 B1

## Beschreibung

### A. Gebiet der Erfindung

Gegenstand der Erfindung sind neue Konzentrate enthaltend Polysiloxane mit verbesserter Stabilität und verbesserten anwendungstechnischen Eigenschaften sowie deren Einsatz in Wasch- und Reinigungsformulierungen, vorzugsweise textilpflegenden Zusammensetzungen.

### B. Stand der Technik

Polysiloxane werden standardmäßig als Additive in textilpflegenden Zusammensetzungen eingesetzt, um vorteilhafte Effekte zu erzielen (z.B. besserer Weichgriff, Knitterfestigkeit u.s.w). Ein Nachteil von Polysiloxanen ist deren schlechte Formulierbarkeit auf Grund ihres sehr hydrophoben Charakters. Die daraus resultierenden Weichspülerformulierungen sind zudem auch nicht hinreichend lange stabil. Zum Beispiel findet Phasenseparation statt. Beispiele für solche Polysiloxane finden sich in der EP 2 557 107 A1. Weitere Beispiele für Zusammensetzungen, die Polysiloxane enthalten sind aus EP 2444447 A2, WO 2008040785 A1 und WO 02088456 A1 bekannt.

Die aminofunktionellen Polysiloxane der EP 2 557 107 A1 sowie deren Formulierungen weisen in Abhängigkeit der Lagerbedingungen eine zunehmende Gelbfärbung auf. Zudem kann die Viskosität der Polysiloxane bei Lagerung ansteigen bis hin zur Vergelung.

Bisher wurde versucht, die Probleme beim Einsatz von Polysiloxanen zumindest teilweise durch eine Vorformulierung der Polysiloxane als Makro- oder Mikroemulsion zu lösen. Die Vorformulierung der Polysiloxane als Makro- oder Mikroemulsion führte zu einer verbesserten Formulierbarkeit, was in einer verbesserten Lagerstabilität des Weichspülers resultierte. Das Viskositätsproblem wurde jedoch mit der Vorformulierung als Makro- oder Mikroemulsion eher verschlimmert. Die Haltbarkeit solcher Vorformulierungen bzw. der enthaltenen N-haltigen Polysiloxane ist insbesondere bei höheren Temperaturen zu gering für eine problemlose praktische Anwendbarkeit.

Aufgabe der Erfindung war es, mindestens einen der Nachteile des Standes der Technik zu überwinden. Weitere nicht explizit genannte Aufgaben ergeben sich aus dem Gesamtzusammenhang der nachfolgenden Beschreibung, Beispiele und Ansprüche.

### C. Beschreibung der Erfindung

Überraschenderweise wurde gefunden, dass Konzentrate umfassend die Komponenten

A) mindestens ein Polysiloxan,
B) mindestens ein Ester- oder Mineralöl,
C) mindestens ein nicht-ionisches Tensid,
D) mindestens ein nicht-wässriges Lösungsmittel,
E) optional Wasser
F) optional eine oder mehrere Säuren

wobei der Gehalt an Komponenten E) und F) in Summe, bezogen auf das Gesamtgewicht der Konzentrate, zwischen 0 und 5 Gew. % beträgt, ausgesprochen lagerstabil und vorzugsweise klar sind und somit die gestellte Aufgabe lösen.

Ohne an eine bestimmte Theorie gebunden zu sein, sind die Erfinder der Ansicht, dass durch die Abwesenheit bzw. die weitgehende Abwesenheit von Wasser in den erfindungsgemäßen Konzentraten sowie der Zugabe eines oder mehrerer Ester- und/oder Mineralöle eine Hydrolyse der Polysiloxane verlangsamt oder gar verhindert und somit das Viskositätsproblem und das Vergilbungsproblem gelöst wurde. Ferner wurde gefunden, dass die erfindungsgemäßen Konzentrate selbstemulgierend sind bzw. sehr leicht in einer Weichspülerformulierung dispergiert/formuliert werden können. Dies ist insofern überraschend, als dass eher hydrophile Tenside mit den sehr hydrophoben Polysiloxanen üblicherweise nicht mischbar sind und keine stabilen, klaren Konzentrate bilden.

Ein Vorteil der vorliegenden Erfindung ist es also, dass die Konzentrate selbst nach längerer Lagerung zu Weichspülerformulierungen verarbeitet werden können. Im Vergleich zu Weichspülerformulierungen des Standes der Technik wurden mit Weichspülerformulierungen enthaltend die erfindungsgemäßen Konzentrate zudem

- ein verbessertes Weichgriffgefühl bei Textilien, insbesondere bei Textilien aus Baumwollstoffen, und
- eine bessere Parfümretention

gefunden.

Ein weiterer Vorteil der vorliegenden Erfindung ist, dass frei wählbare sehr hydrophobe Öle wie Pflanzenöle

zu einem gewissen Anteil klar eingearbeitet werden und damit ebenfalls leicht formuliert werden können.

Noch ein Vorteil der vorliegenden Erfindung ist, dass die erfindungsgemäßen Konzentrate und Wasch- bzw. Reinigungsformulierungen ohne Konservierungsmittel auskommen, auch wenn deren Zugabe nicht ausgeschlossen ist.

Im Zusammenhang mit der vorliegenden Erfindung sind unter dem Begriff "Fettsäuren" insbesondere Ameisensäure, Essigsäure, Propionsäure, Buttersäure, Valeriansäure, Capronsäure, Önanthsäure, Caprylsäure, Pelargonsäure, Caprinsäure, Laurinsäure, Myristinsäure, Pentadecansäure, Palmitinsäure, Margarinsäure, Stearinsäure, Nonadecansäure, Arachinsäure, Behensäure, Lignocerinsäure, Cerotinsäure, Montansäure, Melissinsäure, Undecylensäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Alpha-Linolensäure, Gamma-Linolensäure, Calendulasäure, Punicinsäure, Alpha-Elaeostearinsäure, Beta-Elaeostearinsäure, Arachidonsäure, Timnodonsäure, Clupanodonsäure, Cervonsäure, Vernolsäure, Rizinolsäure zu verstehen, wobei solche mit einer Kettenlänge von 6 bis 24, bevorzugt 6 bis 22, insbesondere 8 bis 18 C-Atomen besonders bevorzugt sind; analoges gilt für das Kohlenstoffgrundgerüst für den im Zusammenhang mit der Erfindung verwendeten Begriff "Fettalkohole".

Alle angegebenen Prozent (%) sind, wenn nicht anders angegeben, Massenprozent.

Alle Bedingungen wie beispielsweise Druck und Temperatur sind, wenn nicht anders angegeben, Standardbedingungen (20 °C, 1 bar).

Unter "Konzentrate" werden im Rahmen der vorliegenden Erfindung Formulierungen enthaltend textpflegende Wirkstoffe (Aktivstoffe), mit einem sehr geringen Wasseranteil verstanden. Die Begriffe "Konzentrat" und "Wirkstoffzusammensetzung" werden synonym verwendet. Die Konzentrate können entweder selbst als Wasch- und Reinigungsformulierung, insbesondere als Weichspüler, oder zu deren Herstellung verwendet werden. Werden die Konzentrate zur Herstellung von Wasch- und Reinigungsformulierungen verwendet, so erfolgt bei der Herstellung eine Verdünnung des Konzentrats und in der Regel eine Zugabe weiterer Additive. Die Verdünnung erfolgt vorzugsweise mit Wasser und/oder einem organischen Lösungsmittel.

Gegenstand der vorliegenden Erfindung sind Konzentrate nach Anspruch 1, ein Verfahren zur Herstellung von Wasch- und Reinigungsformulierungen nach Anspruch 12 und die Verwendung der erfindungsgemäßen Konzentrate zur Herstellung von Weichspülerformulierungen gemäß Anspruch 13. Bevorzugte Ausführungsformen werden in den Unteransprüchen beansprucht. Gegenstand der vorliegenden Erfindung ist insbesondere ein Konzentrat, das zur Herstellung von oder zur Verwendung als Wasch- und Reinigungsformulierung, bevorzugt als Weichspüler, geeignet ist, umfassend die Komponenten

A) ein oder mehrere Polysiloxan(e),
B) ein oder mehrere Ester- oder Mineralöl(e),
C) ein oder mehrere nicht-ionische(s) Tensid(e), bevorzugt ausgewählt aus der Gruppe bestehend aus Fettalkoholethoxylaten und Tensiden auf Glycerolbasis,
D) ein oder mehrere nicht-wässrige(s) Lösungsmittel,
E) optional Wasser
F) optional eine oder mehrere Säuren

wobei der Gehalt an Komponenten E) und F) in Summe, bezogen auf das Gesamtgewicht des Konzentrats, zwischen 0 und 5 Gew. % beträgt.

Jede der Komponenten A) bis D) und F) kann in Form einer Reinsubstanz oder als Gemisch mehrerer Substanzen vorliegen, z.B. als Gemisch mehrerer Polysiloxane für Komponente A oder als Gemisch mehrerer Ester- oder Mineralöle für Komponente B. Ein bevorzugtes Konzentrat ist dadurch gekennzeichnet, dass es die Komponenten,

A) in einer Menge, in Summe aller enthaltenen Polysiloxane, von 20 Gew.-% bis 80 Gew.-%, bevorzugt 25 Gew.-% bis 80 Gew.-%, besonders bevorzugt 30 Gew.-% bis 80 Gew.-%, ganz besonders bevorzugt 40 Gew.-% bis 75 Gew.-%, und am meisten bevorzugt 45 Gew.-% bis 75 Gew.-%,
B) in einer Menge, in Summe aller enthaltenen Ester- und Mineralöle, von 5 Gew.-% bis 50 Gew.-%, bevorzugt 5 Gew.-% bis 45 Gew.-%, besonders bevorzugt 5 Gew.-% bis 40 Gew.- %, ganz besonders bevorzugt 5 Gew.-% bis 35 Gew.-% und am meisten bevorzugt 10 Gew.- % bis 35 Gew.-%,
C) in einer Menge, in Summe aller enthaltenen nicht-ionischen Tenside, von 1 Gew.-% bis 25 Gew.-%, bevorzugt 1 Gew.-% bis 20 Gew.-%, besonders bevorzugt 2 Gew.-% bis 20 Gew.- %, ganz besonders bevorzugt 2 Gew.-% bis 15 Gew.-% und am meisten bevorzugt 5 Gew.- % bis 15 Gew.-%
D) in einer Menge, in Summe aller enthaltenen Lösungsmittel, von 0,1 Gew.-% bis 50 Gew.-%, bevorzugt 0,1 Gew.-% bis 40 Gew.-%, besonders bevorzugt 0,1 Gew.-% bis 35 Gew.-%, ganz besonders bevorzugt 0,1 Gew.-% bis 30 Gew.-%, speziell bevorzugt 0,1 Gew.-% bis 25 Gew.-%, ganz speziell bevorzugt 0,5 Gew.-% bis 20 Gew.-% und am meisten bevorzugt 1 Gew.-% bis 15 Gew.-%,
E) in einer Menge von 0 Gew.-% bis 3 Gew.-%, bevorzugt 0 Gew.-% bis 2 Gew.-%, besonders bevorzugt 0 Gew.-

% bis 1 Gew.-%, ganz besonders 0 Gew.-% bis 0,5 Gew.-% und am meisten bevorzugt 0 Gew.-%, und
F) in einer Menge, in Summe aller enthaltenen Säuren, von 0 Gew.-% bis 3 Gew.-%, bevorzugt 0 Gew.-% bis 2 Gew.-%, besonders bevorzugt 0 Gew.-% bis 1 Gew.-%, ganz besonders 0 Gew.-% bis 0,5 Gew.-% und am meisten bevorzugt 0 Gew.-%,

enthält, wobei sich die Gew.-% auf die Gesamtzusammensetzung des Konzentrats beziehen und die Mengen der einzelnen Komponenten A) bis F) sowie optional weiterer Komponenten so gewählt werden, dass sie sich in Summe zu 100 Gew.% des Konzentrats addieren.

Als Komponente A) werden Siloxane bzw. Polysiloxane, insbesondere aminofunktionelle Polysiloxane, Polyethersiloxane, Polysiloxane mit langkettigen Alkylresten oder Mischungen davon, besonders bevorzugt aminofunktionelle Polysilxoane verwendet.

Zur Beschreibung der Siloxane wird hier eine Schreibweise analog der Literatur: Walter Noll, Chemie und Technologie der Silicone, Verlag Chemie GmbH, 2. Auflage, 1968, gewählt. Die erfindungsgemäßen Polysiloxane besitzen verschiedene Siloxaneinheiten die im Molekül unterschiedlich miteinander kombiniert sein können. Die Begriffe "Polysiloxan" und "Siloxan" werden im Rahmen der vorliegenden Erfindung synonym verwendet.

Die Zusammensetzung der Siloxaneinheiten ergibt sich unter der Berücksichtigung der Tatsache, dass jedes Sauerstoffatom als Brückenglied zwischen je zwei Siliziumatomen fungiert und demgemäß jedem Siliziumatom nur zur Hälfte zuzurechnen ist. Die verschiedenen Siloxaneinheiten sind über 2 halbe Sauerstoffatome ($-O_{1/2}O_{1/2}-$) Gruppen miteinander verknüpft, wodurch eine Sauerstoffbrücke (-O-) dargestellt wird.

In einer ersten bevorzugten Ausführungsform der vorliegenden Erfindung handelt es sich bei Komponente A) um ein aminofunktionelles Polysiloxan gemäß Formel 1

$$M_a\ D_b\ D^A{}_c\ D^B{}_d\ D^c{}_e\ T_f\ T^A{}_g\ Q_h \qquad \text{(Formel 1)}$$

wobei

$M = [R^2R^1{}_2SiO_{1/2}]$
$D = [R^1{}_2SiO_{2/2}]$
$D^A = [R^1Si(R^7NHR^3)O_{2/2}]$
$D^B = [R^1SiR^4O_{2/2}]$
$D^C = [R^1SiR^5O_{2/2}]$
$T = [R^1SiO_{3/2}]$
$T^A = [Si(R^7NHR^3)O_{3/2}]$
$Q = [SiO_{4/2}]$

mit

$R^1$ unabhängig voneinander gleiche oder verschiedene, lineare oder verzweigte, gesättigte oder ungesättigte Kohlenwasserstoffreste mit 1 bis 30, bevorzugt 1 bis 18, besonders bevorzugt 1 bis 6, insbesondere bevorzugt 1 bis 3 Kohlenstoffatomen oder auch aromatische Kohlenwasserstoffreste mit 6 bis 30 Kohlenstoffatomen, bevorzugt Methyl oder Phenyl, besonders bevorzugt Methyl,

$R^2$ unabhängig voneinander gleich $R^1$, ein linearer oder verzweigter, gesättigter oder ungesättigter Alkoxyrest mit 1 bis 30, bevorzugt 1 bis 18, besonders bevorzugt 1 bis 6, insbesondere bevorzugt 1 bis 3 Kohlenstoffatomen oder eine Hydroxygruppe, bevorzugt $R^1$, besonders bevorzugt Methyl,

$R^3$ unabhängig voneinander Wasserstoff oder ein mit Stickstoffatomen substituierter Kohlenwasserstoffrest mit 1 bis 30, bevorzugt 1 bis 18, besonders bevorzugt 1 bis 6, insbesondere bevorzugt 1 bis 3 Kohlenstoffatomen, bevorzugt ein Aminoethylrest oder Wasserstoff, besonders bevorzugt Wasserstoff,

$R^4$ unabhängig voneinander gleiche oder verschiedene lineare oder verzweigte, gesättigte oder olefinisch ungesättigte Kohlenwasserstoffreste mit 8 bis 30 Kohlenstoffatomen, bevorzugt Decyl-, Dodecyl, Tetradecyl-, Hexadecyl-, Octadecyl-, besonders bevorzugt Hexadecyl- und Octadecyl-,

$R^5$ unabhängig voneinander gleiche oder verschiedene lineare oder verzweigte, gesättigte oder ungesättigte polare hydroxysubstituierte Amidreste mit 1 bis 30 Kohlenstoffatomen, und/oder lineare oder verzweigte, gesättigte oder ungesättigte polare hydroxysubstituierte Harnstoffderivate mit 1 bis 30 Kohlenstoffatomen und/oder hydroxysubstituierte Carbamatreste mit 1 bis 30 Kohlenstoffatomen und/oder ethoxylierte Aminreste mit 1 bis 80, bevorzugt 1 bis 40, besonders bevorzugt 1 bis 30 Kohlenstoffatomen und/oder Guanidinreste oder Alkylenylguanidinreste mit 1 bis 30 Kohlenstoffatomen,

$R^7$ unabhängig voneinander gleiche oder verschiedene lineare oder verzweigte, gesättigte oder ungesättigte, divalente Kohlenwasserstoffgruppe mit 1 bis 20 Kohlenstoffatomen, bevorzugt mit 1 bis 6 Kohlenstoffatomen, besonders bevorzugt $-C_2H_4-$ und $-C_3H_6-$, am meisten bevorzugt $-C_3H_6-$,

a 2 - 20, bevorzugt 2 bis 10, besonders bevorzugt 2 bis 5, ganz besonders bevorzugt 2 bis 3 und am meisten bevorzugt 2,

b 10 bis 5000, bevorzugt 20 bis 2000, besonders bevorzugt 20 bis 1000,

c 1 bis 500, bevorzugt 1 bis 250, besonders bevorzugt 1 bis 100, ganz besonders bevorzugt 1 bis 50 und am meisten bevorzugt 1 bis 30,

d 0 bis 500, bevorzugt 0 bis 250, besonders bevorzugt 0 bis 100, ganz besonders bevorzugt 0 bis 50 und am meisten bevorzugt 0 bis 30,

e 0 bis 500, bevorzugt 0 bis 250, besonders bevorzugt 1 bis 100, ganz besonders bevorzugt 1 bis 50 und am meisten bevorzugt 1 bis 30,

f 0 bis 20, bevorzugt 0 bis 10, besonders bevorzugt 0 bis 5, ganz besonders bevorzugt 0 bis 2 und am meisten bevorzugt 0,

g 0 bis 20, bevorzugt 0 bis 10, besonders bevorzugt 0 bis 5, ganz besonders bevorzugt 0 bis 2 und am meisten bevorzugt 0,

h 0 bis 20, bevorzugt 0 bis 10, besonders bevorzugt 0 bis 5, ganz besonders bevorzugt 0 bis 2 und am meisten bevorzugt 0,

oder deren ionischen Addukte mit protischen Reaktanden $H^+A^-$.

Besonders bevorzugt handelt es sich bei $R^5$ um einem Substituenten ausgewählt aus der Gruppe der Substituenten der Formeln 1a bis 1j,

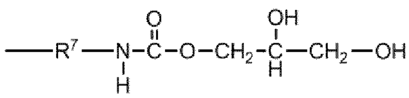

(1a)

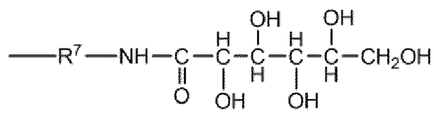

(1b)

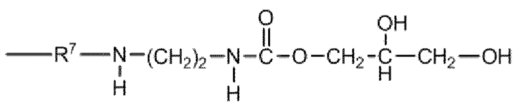

(1c)

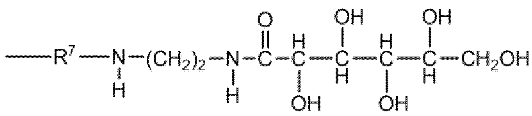

(1d)

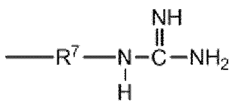

(1e)

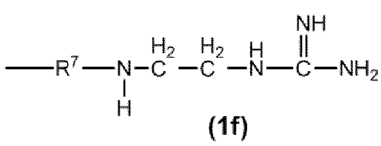

(1f)

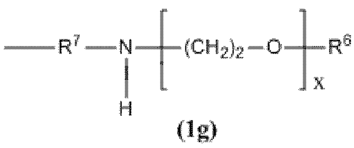

(1g)

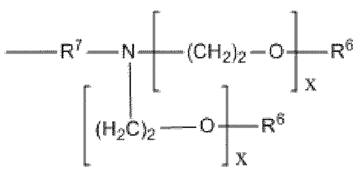

(1h)

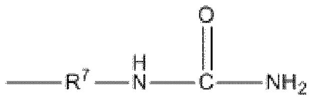

(1i)

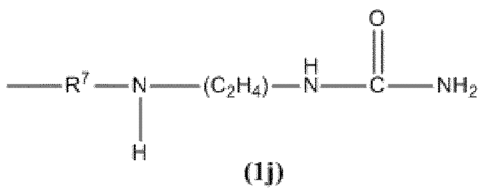

(1j)

wobei $R^6$ Wasserstoff, ein Kohlenwasserstoffrest, ein Acylrest, ein Carboxylatrest oder ein Carbamat- oder Carbonatrest ist, besonders bevorzugt Wasserstoff und $CH_3$-C(O) und x gleich 1 bis 20, bevorzugt 1 bis 10, besonders bevorzugt 1 bis 5 und insbesondere 1 bis 2.

Ein weiterer Gegenstand der Erfindung sind die zuvor bereits erwähnten ionischen Addukte der erfindungsgemäß verwendeten Polysiloxane nach Formel (1) mit Säuren der allgemeinen Formel $H^+A^-$. Die Anionen $A^-$ sind gleiche oder verschiedene Gegenionen zu den positiven Ladungen, ausgewählt aus anorganischen oder organischen Anionen der Säuren $H^+A^-$, sowie deren Derivate. Bevorzugte Anionen sind beispielsweise Chlorid, Sulfat oder Hydrogensulfate, Carbonat oder Hydrogencarbonat, Phosphat oder Hydrogenphosphate, Acetat oder homologe Carboxylate mit linearen oder verzweigten, gesättigten oder olefinisch ungesättigten Alkylketten, aromatische Carboxylate, aus Aminosäuren gebildete Carboxylate, Citrate, Malonate, Fumarate, Maleate, substituierte und unsubstituierte Succinate und aus L-Hydroxycarbonsäuren gebildete Carboxylate, wie beispielsweise Lactat. Die erfindungsgmäßen Siloxane und ihre ionischen Addukte können je nach Stabilität des gebildeten Addukts in Dissoziationsgleichgewichten vorliegen.

In einer zweiten bevorzugten Ausführungsform der vorliegenden Erfindung handelt es sich bei Komponente A) um ein Polyethersiloxan oder Polysiloxane mit langkettigem Alkylrest gemäß Formel 2

$$M_i\, M^1_j\, D_k\, D^1_l\, D^2_m T_n\, Q_o \qquad \text{(Formel 2)}$$

wobei

$M = [R^2R^1_2SiO_{1/2}]$
$M^1 = [R^1R^{10}_2SiO_{1/2}]$
$D = [R^1_2SiO_{2/2}]$
$D^1 = [R^1R^{10}SiO_{2/2}]$
$D^2 = [R^1R^{13}SiO_{2/2}]$
$T = [R^1SiO_{3/2}]$
$Q = [SiO_{4/2}]$

mit

- i 0 bis 20, bevorzugt 1 bis 10, besonders bevorzugt 2 bis 5, ganz besonders bevorzugt 2 bis 3 und am meisten bevorzugt 2,
- j 0 bis 20, bevorzugt 0 bis 10, besonders bevorzugt 0 bis 5, ganz besonders bevorzugt 0 bis 2 und am meisten bevorzugt 0,
- k 3 bis 450, bevorzugt 5 bis 350, besonders bevorzugt 10 bis 250,
- l 0 bis 60, bevorzugt 0 bis 50, besonders bevorzugt 0 bis 40, ganz besonders bevorzugt 0bis 35 und am meisten bevorzugt 0 bis 30,
- m 0 bis 60, bevorzugt 1 bis 50, besonders bevorzugt 0 bis 40, ganz besonders bevorzugt 0 bis 35 und am meisten bevorzugt 0 bis 30,
- n 0 bis 20, bevorzugt 0 bis 10, besonders bevorzugt 0 bis 5, ganz besonders bevorzugt 0 bis 2 und am meisten bevorzugt 0,
- o 0 bis 20, bevorzugt 0 bis 10, besonders bevorzugt 0 bis 5, ganz besonders bevorzugt 0 bis 2 und am meisten bevorzugt 0,

wobei gilt, $i + j \geq 2$ sowie $N = i + j + k + l + m + n \leq 500$, $j + l + m \geq 1$,

- $R^1$ und $R^2$ definiert wie für Formel 1,
- $R^{10}$ unabhängig voneinander gleiche oder verschiedene Polyetherreste, bevorzugt gleiche oder verschiedene Polyetherreste der allgemeinen Formel III

$$-\left[CH_2\right]_p-O-\left[CH_2CH_2O\right]_q-\left[CH_2CH(CH_3)O\right]_r-\left[CH(CH_3)CH_2O\right]_s-\left[CR^{11}{}_2CR^{11}{}_2O\right]_t-R^{12}$$

Formel 3

mit

- $R^{11}$ unabhängig voneinander, gleiche oder verschiedene Alkylreste 1 bis 18 Kohlenstoffatomen, die gegebenenfalls Etherfunktionen besitzen, oder Arylreste mit 6 - 18 Kohlenstoffatomen, die gegebenenfalls Etherfunktionen besitzen, oder Wasserstoff, bevorzugt Wasserstoff, Ethyl und Benzyl,
- $R^{12}$ gleiche oder verschiedene Reste aus der Gruppe: $R^1$, Wasserstoff, $-C(O)R^1$, bevorzugt Methyl, Butyl, Wasserstoff oder $-C(O)CH_3$,
- $R^{13}$ unabhängig voneinander gleiche oder verschiedene lineare oder verzweigte, gesättigte oder olefinisch ungesättigte Kohlenwasserstoffreste mit 8 bis 30 Kohlenstoffatomen, beispielsweise Decyl-, Dodecyl, Tetradecyl-, Hexadecyl-, Octadecyl-, insbesondere Hexadecyl- und Octadecyl-;
- p 2 bis 18, bevorzugt 2 bis 10, besonders bevorzugt 2 bis 5, ganz besonders bevorzugt 2 bis 5, insbesondere 2 bis 3 und am meisten bevorzugt 3,
- q 0 bis 100, bevorzugt 0 bis 80, besonders bevorzugt 0 bis 70, ganz besonders bevorzugt 0 bis 60 und am meisten bevorzugt 0 bis 50,
- r 0 bis 100, bevorzugt 0 bis 80, besonders bevorzugt 0 bis 70, ganz besonders bevorzugt 0 bis 60 und am meisten bevorzugt 0 bis 50,
- s 0 bis 100, bevorzugt 0 bis 80, besonders bevorzugt 0 bis 70, ganz besonders bevorzugt 0 bis 60 und am meisten bevorzugt 0 bis 50,
- t 0 bis 80, bevorzugt 0 bis 40, besonders bevorzugt 0 bis 20, ganz besonders bevorzugt 0 bis 10 und am meisten bevorzugt 0,

mit der Maßgabe, dass $q + r + s + t \geq 3$.

Die verschiedenen Monomereinheiten der in den Formeln 1 bis 3 angegebenen Siloxanketten können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Die erfindungsgemäß verwendeten Siloxane bzw. Polysiloxane können hergestellt werden in dem man z.B. unterschiedliche funktionelle Silane in einem Kondensationsverfahren mit endständig hydroxyfunktionellen Polydimethylsiloxanen zu multifunktionellen Polysiloxanen, bevorzugt endverkappten Polysiloxanen umsetzt.

So können z.B. zur Herstellung von Polysiloxanen gemäß Formel 1 in einem ersten Schritt Aminoalkyl-dialkoxysilane an der Aminogruppe weiter funktionalisiert werden und in einem zweiten Schritt in gezielten Verhältnissen zueinander mit hydroxyfunktionellen Polydimethylsiloxanen in Gegenwart von Trimethylsilylgruppen freisetzenden Reagenzien cokondensiert werden.

Das Verfahren beruht bevorzugt auf der Verwendung der nachfolgend beispielhaft genannten Verbindungen, wobei

a) endständig hydroxyfunktionelle, lineare oder verzweigte Polysiloxane und deren Mischungen mit Dimethyldialkoxysilanen oder Methyltrialkoxysilanen oder Tetraethoxysilan, bevorzugt lineare endständig dihydroxyfunktionelle Polysiloxane

b) Hexamethyldisilazan oder mit unterschiedlichen Kohlenstoffresten substituierte Disilazane, wie beispielsweise Divinyltetramethyldisilazan, bevorzugt Hexamethyldisilazan;

c) 3-Aminopropylmethyldialkoxysilane, N-(2-Aminoethyl)-3-aminopropylmethyldialkoxysilane oder weitere funktionelle Dialkoxysilane, die lineare oder verzweigte, gesättigte oder ungesättigte Kohlenwasserstoffreste enthalten, die mit hydroxysubstituierten Amiden und/oder die Harnstofferivate und/oder hydroxysubstituierten Carbamatstrukturen und/oder ethoxylierten Aminen und/oder Guanidin- oder Alkylenylguanidinstrukturen substituiert sind oder ausgewählt sind aus der Gruppe der Substanzen der Formeln 2a-k

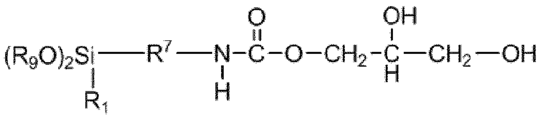

(2a)

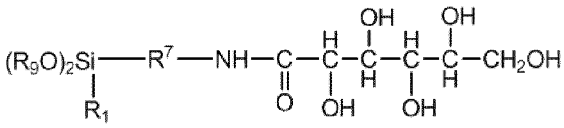

(2b)

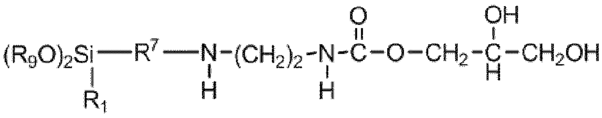

(2c)

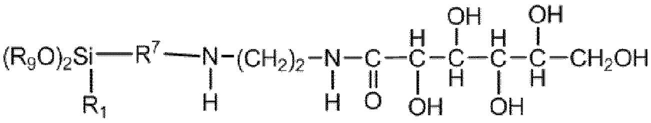

(2d)

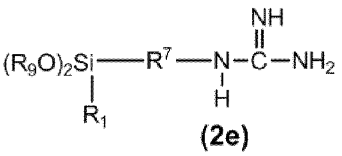

(2e)

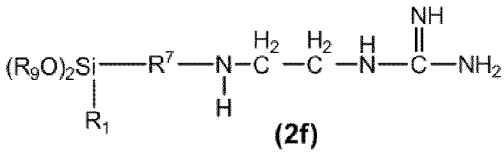

(2f)

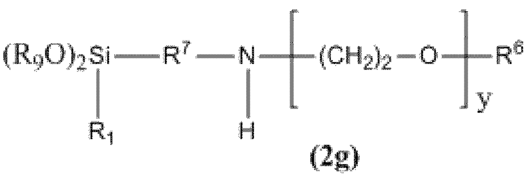

(2g)

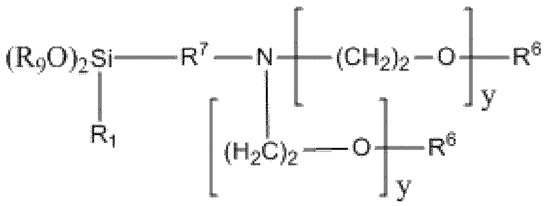

(2h)

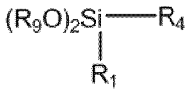

(2i)

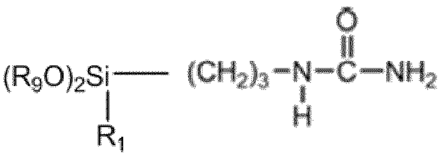

(2j)

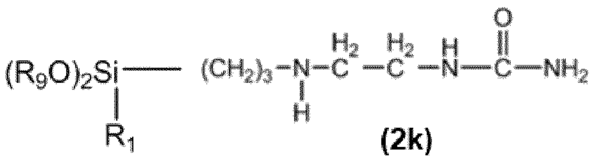

(2k)

wobei $R_1$, $R_4$, $R_6$ und $R_7$ die vorgenannte Bedeutung der Formel 1 haben, $R_8 = R_6$, vorzugsweise ein Wasserstoffatom, eine Methyl- oder eine Carboxylgruppe, bevorzugt H oder Acetyl, $R_9$ ein Alkyl- oder Acylrest, insbesondere Methyl, Ethyl oder Acetyl und y = x ist, miteinander umgesetzt werden. Die Silane werden zweckmäßigerweise als Monomer eingesetzt. Sofern es für die spätere Anwendung von Vorteil ist, können die Silane unter hydrolytisch sauren Bedingungen zu Oligomeren vorkondensiert werden, bevor durch Zugabe der dihydroxyfunktionellen Polysiloxane der Polymeraufbau initiiert wird.

Es kann vorteilhaft sein, das verwendete Silazan nicht stöchiometrisch, sondern in leichtem Überschuss zu verwenden. Die verwendeten Dialkoxysilane werden mit im Stand der Technik bekannten Synthesemethoden hergestellt.

So erfolgt die Guanidierung von aminofunktionellen Silanen vorzugsweise analog zu der in der JP 2002 167437 beschriebenen Guanidierung von Aminosiloxanen. Die Umsetzung von aminofunktionellen Siloxanen mit Glycerincarbonat oder Gluconolacton erfolgt bevorzugt in Anlehnung an die EP 1 972 330 A1 und das J. Phys. Chem. B 2010, Vol. 114, pp. 6872-6877.

Als Katalysatoren für die Hydrolyse- und Kondensationsreaktion werden vorzugsweise Carbonsäuren wie beispielsweise Essigsäure, Propionsäure, Isononansäure oder Ölsäure verwendet. Die Reaktion kann unter Zugabe von geringen Wassermengen zur Beschleunigung der Hydrolyse durchgeführt werden, häufig ist in den ungetrocknet verwendeten Reagenzien ausreichend Feuchtigkeit vorhanden. Die Reaktion kann in Substanz oder in Gegenwart von Lösungsmitteln durchgeführt werden, wie beispielsweise in aliphatischen und aromatischen, protischen und aprotischen Lösungsmitteln, Glykolen, Ethern, Fettalkoholalkoxylaten, Mono-, Diund Triglyceriden oder Ölen synthetischen und natürlichen Ursprungs. Die Verwendung von Lösungsmitteln ist beispielsweise dann vorteilhaft, wenn die Kettenlängen der gewünschten Strukturen hohe Viskositäten bedingen. Das Lösungsmittel kann vor, während oder nach der Reaktion zudosiert werden. Die Reaktion kann bei Temperaturen im Bereich von Raumtemperatur bis 150°C, bevorzugt bei 50-100°C durchgeführt werden. Die in der Hydrolyse freigesetzten Alkohole werden während oder nach der Reaktion unter Vakuum abdestilliert. Optional können ein Neutralisationsschritt und ein Filtrationsschritt erfolgen. Weitere Details und Beispiele zur Herstellung von Polysiloxanen gemäß Formel 1 finden sich in der EP 2 557 107 A1, welche hiermit explizit in den Gegenstand der Beschreibung vorliegenden Erfindung einbezogen wird.

Polysiloxane der Formel 2 können beispielsweise wie in der EP 0 596 304, der EP 0 559 013, der EP 2 301 987 oder in "Silicones - an Introduction to their chemistry and applications" - G.G. Freeman, beschrieben hergestellt werden.

Komponente B) ist ein Ester- oder Mineralöl

Unter dem Begriff "Ester- oder Mineralöl" im Zusammenhang mit der vorliegenden Erfindung sind mit Wasser nicht-mischbare Flüssigkeiten, welche zur Herstellung von Weichspülerformulierungen geeignet sind, zu verstehen. Mit Wasser nicht mischbar bedeutet im Zusammenhang mit der vorliegenden Erfindung, dass bei Raumtemperatur wässrige Mischungen der Öle bei Ölkonzentrationen von 0,5 - 99,5 vol.-% bezogen auf die Gesamtmischung zu einer bereits mit dem menschlichen Auge wahrnehmbaren Trübung bzw. zur Ausbildung von zwei oder mehr Phasen führen. Des Weiteren sind im Zusammenhang mit der vorliegenden Erfindung Ester- oder Mineralöle bevorzugt dadurch gekennzeichnet, dass sie zu Wasser ein Grenzflächenspannung von > 5 mN/m aufweisen. Ester- oder Mineralöle können zum Beispiel Oleochemie- oder Silikonchemie basiert sein.

Bevorzugt sind in den erfindungsgemäßen Konzentraten Ester- oder Mineralöle, ausgewählt aus der Gruppe bestehend aus

- Fettsäureestern, bevorzugt Estern von linearen Fettsäuren mit linearen oder verzweigten Fettalkoholen, Estern von verzweigten Fettsäuren mit linearen oder verzweigten Fettalkoholen, Estern von linearen Fettsäuren mit unverzweigten oder verzweigten mehrwertigen Alkoholen, Estern von verzweigten Fettsäuren mit unverzweigten oder verzweigten mehrwertigen Alkoholen, Estern von linearen Fettsäuren mit unverzweigten oder verzweigten Alkoholen, Estern von verzweigten Fettsäuren mit unverzweigten oder verzweigten Alkoholen, Estern von Alkylhydroxycarbonsäuren mit linearen oder verzweigten Fettalkoholen,
- Mono-, Di- oder Triglyceriden in flüssiger oder fester Form
- Fettalkoholestern, bevorzugt Estern von Carbonsäuren, aromatischen Carbonsäuren oder Dicarbonsäuren mit linearen oder verzweigten Fettalkoholen, unverzweigten oder verzweigten mehrwertigen Alkoholen oder unverzweigten oder verzweigten Alkoholen
- linearen, cyclischen oder verzweigten Kohlenwasserstoffe, mit oder ohne Substituenten, mit oder ohne Doppelbindungen
- pflanzlichen Öle,
- Carbonaten mit unverzweigten oder verzweigten Alkoholen,
- Ethern, mit oder ohne Alkoxygruppen,
- Polydimethylsiloxane,
- Mischungen o.g. Öle in beliebigen Verhältnissen,

enthalten.

Besonders bevorzugt sind

- Ester von linearen und/oder verzweigten Fettsäuren mit linearen und/oder verzweigten einoder mehrwertigen Alkoholen, besonders bevorzugt Fettalkoholen.
- Mono-, Di- oder Triglyceride in flüssiger oder fester Form,

- Ester von Carbonsäuren, aromatischen Carbonsäuren oder Dicarbonsäuren mit linearen oder verzweigten Fettalkoholen, unverzweigten oder verzweigten mehrwertigen Alkoholen oder unverzweigten oder verzweigten Alkoholen,
- Lineare, cyclische oder verzweigte Kohlenwasserstoffe, mit oder ohne Substituenten, mit oder ohne Doppelbindungen,
- Pflanzliche Öle, Carbonate mit unverzweigten oder verzweigten Alkoholen,

enthalten.

Ganz besonders bevorzugt sind

- Pflanzliche Öle, Carbonate mit unverzweigten oder verzweigten Alkoholen
- lineare, cyclische oder verzweigte Kohlenwasserstoffe, mit oder ohne Substituenten, mit oder ohne Doppelbindungen,
- Ester von linearen und/oder verzweigten Fettsäuren mit linearen und/oder verzweigten einoder mehrwertigen Alkoholen,

enthalten.

Ebenfalls besonders bevorzugt sind die in der EP 2000123 A1 in der Ölphase verwendeten Esterund Mineralöl. Der Inhalt der EP 2 000 123 A1 wird hiermit explizit in die Beschreibung der vorliegenden Anmeldung mit einbezogen.

Komponente C) ist erfindungsgemäß mindestens ein nicht-ionisches Tensid.

Bevorzugte nicht-ionische Tenside sind ausgewählt aus der Gruppe enthaltend, bevorzugt bestehend aus,

- Anlagerungsprodukten von Ethylenoxid und/oder Propylenoxid an lineare Fettalkohole, Fettsäuren, Fettsäureamide, Fettamine und an Alkylphenole, bevorzugt Fettalkoholexthoxylate,
- Glycerinmono-, -di- und -triester und Sorbitanmono-, -di- und -triester von gesättigten und ungesättigten Fettsäuren und deren Ethylenoxidanlagerungsprodukte,
- Alkylmono- und -oligoglycoside und deren Ethylenoxidanlagerungsprodukte,
- Langkettige Fettalkohole mit einer mittleren Kettenlänge von 10 bis 24, bevorzugt 10 bis 18 Kohlenstoffatomen
- Partialester auf Basis linearer, verzweigter, ungesättigter bzw. gesättigter Fettsäuren, Ricinolsäure, 12-Hydroxystearinsäure, Polyglycerin, Pentaerythrit, Dipentaerythrit und Zuckeralkohole (z.B. Sorbit), Polyglucoside (z.B. Cellulose), Mono-, Di- und Trialkylphosphate sowie Mono-, Di- und/oder Tri-PEG-alkylphosphate und deren Salze, Zitronensäureester wie z.B. Glyceryl Stearate Citrate, Glyceryl Oleate Citrate und Dilauryl Citrate
- weiter alkoxylierte Triglyceride, Mischether bzw. Mischformale, gegebenenfalls partiell oxidierte Alkyloligoglykoside oder Alkenyloligoglykoside bzw. Glucoronsäurederivate, Fettsäure-N-alkylglucamide,

und Mischungen dieser Tenside.

Ebenfalls bevorzugte nicht-ionische Tenside als Komponente C) sind Polyglycerinester. Unter dem Begriff "Polyglycerinester" im Zusammenhang mit der vorliegenden Erfindung werden Polyglycerinpartialester, somit Verbindungen bei denen nicht alle Hydroxylgruppen verestert wurden, mitumfasst.

Erfindungsgemäß bevorzugt ist der Polyglycerinester der Komponente C) ausgewählt aus solchen der allgemeinen Formel V

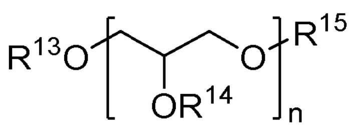

allgemeine Formel 4

mit

n = 2 bis 16, bevorzugt 3 - 14, besonders bevorzugt 4-11, und
$R^{13}$, $R^{14}$, $R^{15}$ = unabhängig voneinander gleich oder verschieden ausgewählt aus H und
gegebenenfalls mindestens eine Hydroxylgruppe enthaltender, gesättigter oder ungesättigter, linearer oder verzweigter Acylrest mit 4 - 36 C-Atomen, insbesondere ausgewählt aus den Acylresten natürlicher Fettsäuren.

Die Polyglycerinester der allgemeinen Formel 4 enthalten mindestens einen Acylrest pro Molekül.

$R^{13}$ ist bevorzugt H und die Reste $R^{14}$ und $R^{15}$ sind bevorzugt H oder Acylreste von natürlichen Fettsäuren. $R^{14}$ und $R^{15}$ können auch Mischungen solcher Acylreste repräsentieren, insbesondere technische Mischungen wie beispielsweise Kokosfettsäureschnitte.

Für $R^{14}$ und $R^{15}$ ist es insbesondere bevorzugt, dass bezogen auf alle Reste $R^{14}$ und $R^{15}$ im Polyglycerinester mindestens 50 Mol-%, bevorzugt mindestens 75 Mol-% der Acylreste $R^{15}$ ausgewählt sind aus Capryloyl-, Caproyl- und Lauroylresten.

Dem Fachmann ist bewusst, dass das in der allgemeinen Formel 4 enthaltene Polyglycerin-Grundgerüst aufgrund seiner polymeren Eigenschaft eine statistische Mischung verschiedener Verbindungen darstellt. Polyglycerin kann Etherbindungen zwischen zwei primären, einer primären und einer sekundären sowie zwei sekundären Positionen der Glycerinmonomere aufweisen. Aus diesem Grund besteht das Polyglycerin-Grundgerüst üblicherweise nicht ausschließlich aus linear verknüpften Glycerin-Einheiten, sondern kann auch Verzweigungen und Cyclen enthalten. Für Details siehe z.B. "Original synthesis of linear, branched and cyclic oligoglycerol Standards", Cassel et al., J. Org. Chem. 2001, 875-896. Entsprechende Strukturen sind von der in dieser Hinsicht vereinfachten, allgemeinen Formel 4 miterfasst.

Der Polymerisationsgrad n lässt sich dadurch bestimmen, dass die Hydroxylzahl des zur Synthese des erfindungsgemäßen Esters eingesetzten Polyglycerins bestimmt wird, wobei der mittlere Polymerisationsgrad n mit der Hydroxylzahl des zugrundeliegenden Polyglycerins über folgende Gleichung verknüpft ist:

$$n = \frac{\dfrac{2000 \bullet M(KOH)}{OHZ} - M(Wasser)}{\left[ \left[ M(Glycerin) - M(Wasser) \right] - \dfrac{1000 \bullet M(KOH)}{OHZ} \right]}$$

mit M = molare Masse; OHZ = Hydroxylzahl des freien Polyglycerins.

Alternativ lässt sich der Polymerisationsgrad n auch dadurch berechnen, dass die Hydroxylzahl des nach vollständiger Esterhydrolyse erhaltenen Polyglycerins bestimmt wird.

Geeignete Bestimmungsmethoden zur Ermittlung der Hydroxylzahl sind insbesondere solche gemäß DGF C-V 17 a (53), Ph. Eur. 2.5.3 Method A und DIN 53240.

Besonders bevorzugte nicht-ionische Tenside sind Anlagerungsprodukten von Ethylenoxid und/oder Propylenoxid an lineare Fettalkohole, Fettsäuren, Fettsäureamide, Fettamine und an Alkylphenole.

Erfindungsgemäße Konzentrate enthalten als Komponente D) ein nicht-wässriges Lösungsmittel, welches bevorzugt ausgewählt aus der Gruppe enthaltend, besonders bevorzugt bestehend aus, Hydrotropen beispielsweise aus der Gruppe der ein- und zweiwertigen aliphatischen Alkohole, bevorzugt der aliphatischen , linearen oder verzweigten, ein- oder zweiwertige Alkohole mit 1 bis 6 Kohlenstoffatomen, wie Ethanol, Propanol, Isopropylalkohol, Glycolether (beispielsweise unter dem Namen DOWANOL® von Dow Chemicals erhältlich), wie z.B. Propylenglycol n-Butyl Ether, Dipropylenglycol n-Butyl Ether, Diethylenglycolmonobutylether und Polyole. Polyole, die hier in Betracht kommen, können 2 bis 15 Kohlenstoffatome und mindestens zwei Hydroxylgruppen besitzen. Typische Beispiele sind: Alkylenglycole, wie beispielsweise Ethylenglycol, Diethylenglycol, Propylenglycol, Dipropylenglycol, Butylenglycol, Pentylenglycol, Hexylenglycol, 1,2-Propandiol, 1,3-Propandiol, 1,2-Butandiol, 1,2-Pentandiol, 1,2-Hexandiol sowie Polyethylenglycol oder Polypropylenglycol, Butyldiglycol, und Gemische dieser Lösungsmittel.

Insbesondere bevorzugt ist das nicht-wässrige Lösungsmittel D) ausgewählt aus der Gruppe bestehend aus Isopropanol, Glycol, 1,2-Propylenglycol, 1,3-Propylenglycol, Butylenglycol, Hexylenglycol, ipropylenglycol, Propylenglycol n-Butyl Ether, Dipropylenglycol n-Butyl Ether, Dipropylenglykolmonomethylether, Dipropyleneglycol n-Propyl Ether und Diethylenglycolmonobutylether.

Als Komponente F) können die erfindungsgemäßen Konzentrate eine Mineralsäure oder eine organische Säure zur Einstellung des pH-Wertes enthalten. Besonders bevorzugt ist jedoch möglichst wenig Wasser und Säure, am meisten bevorzugt kein Wasser und/oder keine Säure im Konzentrat enthalten.

Die erfindungsgemäßen Konzentrate lassen sich vorteilhaft zur Herstellung von oder als Waschoder Reinigungsmitteln, insbesondere als oder in Weichspülerformulierung verwenden. Durch das Einbringen in ein Wasch- oder Reinigungsmittel steht dem Verbraucher ein textilpflegendes Wasch- oder Reinigungsmittel ("2in1"- Wasch- oder Reinigungsmittel) zur Verfügung und er braucht nicht zwei Mittel (Wasch- oder Reinigungsmittel und Weichspüler) zu dosieren, sowie keinen separaten Spülgang.

Die erfindungsgemäßen Wasch- oder Reinigungsmittel, insbesondere die Weichspülerformulierungen, sind für Haushalt, industrielle und institutionelle Gewerbe geeignet.

Die Zugabe der erfindungsgemäßen Konzentrate verbessert z.B. den Weichgriff und die Parfümfreisetzung der behandelten und/oder gereinigten Gegenstände. In diesem Zusammenhang handelt es sich bei den zu reinigenden Gegenständen bevorzugt um Stoffe oder Fasern, insbesondere um die einer Faser oder eines Textils, speziell um die Oberfläche von gewobenen Textilien, Wäsche, insbesondere körpernahe Wäsche ("Unterwäsche"), Polstern oder Teppichen.

Die erfindungsgemäße Verwendung kann beispielsweise in Form eines erfindungsgemäßen Verfahrens zur

Herstellung von Wasch- oder Reinigungsmitteln, insbesondere Weichspülerformulierungen stattfinden, welches gekennzeichnet ist durch die Verfahrensschritte:

1) Bereitstellen eines erfindungsgemäßen Konzentrats,
2) Vermischen mit einer wasserhaltigen Phase, bevorzugt umfassend mindestens eine mehrere kationische Textilweichmachende Verbindung, die eine oder mehrere langkettige Alkylgruppen in einem Molekül aufweist, bevorzugt ein quaternäres Ammoniumsalz, und/oder ein Konservierungsmittel und/oder mindestens ein Parfüm.

Gegenstand der vorliegenden Erfindung ist somit auch die die Verwendung der erfindungsgemäßen Konzentrate in textilkonditionierenden und textilpflegenden Zusammensetzungen, insbesondere in textilweichmachenden Zusammensetzungen (Weichspüler) für Haushalt und Industrie.

Bevorzugte erfindungsgemäße Wasch- oder Reinigungsmittel, insbesondere Weichspülerformulierungen, enthaltend mindestens ein erfindungsgemäßes Konzentrat, sind Waschmittel, Wäschepflegemittel, Desinfektionswaschmittel, Vollwaschmittel, Feinwaschmittel, Wollwaschmittel, Weichspülmittel und Imprägniermittel, wobei Waschmittel, Wäschepflegemittel, Vollwaschmittel, Feinwaschmittel, Wollwaschmittel, Weichspülmittel, Imprägniermittel, insbesondere Weichspülmittel besonders bevorzugt sind.

Erfindungsgemäße Wasch- oder Reinigungsmittel, insbesondere Weichspülerformulierungen, enthalten bevorzugt das erfindungsgemäße Konzentrat in einer Menge von 0,1 Gew.-% bis 5 Gew. %, bevorzugt 0,1 Gew.-% bis 2,5 Gew. % wobei sich die Gew.-% auf die Gesamtformulierung beziehen. Die restliche Masse zu 100 Gew. % besteht bevorzugt aus Wasser und/oder mindestens einem Additiv und/oder Hilfsstoff.

Im Markt befindlichen Weichspüler sind wässrige Formulierungen, die als Hauptwirkungsbestandteil eine oder mehrere kationische textilweichmachende Verbindung, die eine oder mehrere langkettige Alkylgruppen in einem Molekül aufweisen, enthalten. Weit verbreitete kationische textilweichmachende Verbindungen umfassen beispielsweise Methyl-N-(2-hydroxyethyl)-N,N-di(talgacyloxyethyl)ammonium-Verbindungen oder N,N-Dimethyl-N,N-di(talgacyloxyethyl)ammonium-Verbindungen. Weitere geeignete Ammoniumverbindungen offenbart die US 2010/0184634 in den Absätzen [0027] bis [0068], deren diesbezüglicher expliziter Offenbarungsgehalt durch diese Bezugnahme Teil dieser Offenbarung wird. Die Weichspüler können darüber hinaus weitere Additive und Hilfsstoffe enthalten, insbesondere Parfüm, Farbstoffe, Viskositätsregulatoren, Entschäumer, Konservierungsmittel, organische Lösemittel, nicht siloxanhaltige Polymere. Insbesondere können die erfindungsgemäßen Zusammensetzungen zwischen 0,001 und 25, besonders bevorzugt 0,01 bis 15 Gew.-% eines oder mehrerer unterschiedlicher Additive oder Hilfsstoffe enthalten.

Als Parfüm können alle für Weichspüler aus dem Stand der Technik als geeignet bekannte Duftstoffe oder Duftstoffmischungen eingesetzt werden, vorzugsweise in Form eines Parfümöles. Beispiele für Duft- bzw. Riechstoffe werden unter anderem in der DE 197 51 151 A1, Seite 4, Zeile 11 - 17 offenbart. Insbesondere können die erfindungsgemäßen Zusammensetzungen von 0,01 bis 10 Gew.-%, besonders bevorzugt 0,1 bis 5 Gew.-% bezogen auf die Gesamtzusammensetzung der Zusammensetzung eines oder mehrerer Parfüme enthalten.

Als Farbstoffe können alle für Weichspüler aus dem Stand der Technik als geeignet bekannte Farbstoffe eingesetzt werden, wobei wasserlösliche Farbstoffe bevorzugt sind. Beispiele für geeignete wasserlösliche handelsübliche Farbstoffe sind SANDOLAN® Walkblau NBL 150 (Hersteller Clariant) und Sicovit® Azorubin 85 E122 (Hersteller BASF). Insbesondere können die erfindungsgemäßen Zusammensetzungen von 0,001 bis 0,1 Gew.-%, besonders bevorzugt von 0,002 bis 0,05 Gew.-% eines oder mehrerer Farbstoffe enthalten.

Als Viskositätsregulator zur Verringerung der Viskosität kann ein Alkalimetall- oder Erdalkalimetallsalz, oder Gemische davon, vorzugsweise Calciumchlorid, bevorzugt in einer Menge von 0,05 bis 2 Gew.-% bezogen auf die Gesamtzusammensetzung der Zusammensetzung enthalten sein.

Als Viskositätsregler zur Erhöhung der Viskosität kann ein aus dem Stand der Technik bekannter Verdicker enthalten sein, wobei die aus WO 2007/125005 bekannten Polyurethanverdicker bevorzugt sind. Beispiele für geeignete Verdicker sind TEGO® Visco Plus 3030 (Hersteller Evonik Resource Efficiency GmbH), Acusol® 880 und 882 (Hersteller Rohm & Haas), Rheovis® CDE (Hersteller BASF), Rohagit® KF 720 F (Hersteller Evonik Performance Materials GmbH) und Polygel® K100 von Neochem GmbH.

Als Entschäumer können alle für aus dem Stand der Technik als geeignet bekannten Entschäumer eingesetzt werden. Beispiele für geeignete handelsübliche Entschäumer sind Dow Corning® DB-110A und TEGO® Antifoam® 7001 XP. Insbesondere können die erfindungsgemäßen Zusammensetzungen von 0,0001 bis 0,05 Gew.-%, bevorzugt von 0,001 bis 0,01 Gew.-% eines oder mehrerer unterschiedlicher Entschäumer enthalten.

Unter dem Begriff "Konservierungsmittel" im Zusammenhang mit der vorliegenden Erfindung ist ein Mittel zu verstehen, welches hinsichtlich mikrobiellem, insbesondere bakteriellem, Bewuchs konserviert. Als Konservierungsmittel kann z.B. der Weichspüler aus dem Stand der Technik als geeignet bekannte bakterizide und/oder fungizide Wirkstoffe enthalten, wobei wasserlösliche Wirkstoffe bevorzugt sind. Beispiele für geeignete handelsübliche Bakterizide sind Methylparaben, 2-Brom-2-nitro-1,3-propandiol, 2-Methyl-4-isothiazolin-3-on und 5-Chlor-2-methyl-4-isothiazolin-3-on. Ebenso kann der wässrige Weichspüler als Konservierungsmittel einen Oxidationsinhibitor enthalten. Beispiele für geeignete handelsübliche Oxidationsinhibitoren sind Ascorbinsäure, 2,6-Di-tert-butyl-4-methylphenol (BHT), Butylhydroxyanisol (BHA), Tocopherol und Propylgallat. Insbesondere können die erfindungsgemäßen Zusammensetzungen von 0,0001 bis 0,5, besonders bevorzugt 0,001 bis 0,2 Gew.-% eines oder mehrerer unterschiedlicher Konservierungsmittel enthalten. Insbesondere können die erfindungsgemäßen Zusammensetzungen von 0,001 bis 0,1 Gew.-%, bevorzugt 0,001 bis 0,01 Gew.-% eines oder mehrerer unterschiedlicher Oxidationsinhibitoren enthalten.

Als organische Lösemittel können in den Wasch- und Reinigungsformulierungen, insbesondere den Weichspülern, kurzkettige Alkohole, Glykole und Glykolmonoether enthalten, wobei Ethanol, 2-Propanol, 1,2-Propandiol und Dipropylenglycol bevorzugt wird. Insbesondere können die erfindungsgemäßen Zusammensetzungen zwischen 0,1 und 10, besonders bevorzugt 0,2 bis 5 Gew.-% eines oder mehrerer unterschiedlicher organischer Lösemittel enthalten.

Die Wasch- und Reinigungsformulierungen, insbesondere der Weichspüler, können eines oder mehrere nichtsiloxanhaltige Polymere enthalten. Beispiele dafür sind Carboxymethylcellulose, Polyethylenglycol, Poylvinylalkohol, Poly(meth)acrylate), Polyethylenimine oder Polysaccharide. Insbesondere können die erfindungsgemäßen Zusammensetzungen zwischen 0,01 und 25, besonders bevorzugt 0,1 bis 10 Gew.-% eines oder mehrerer unterschiedlicher nichtsiloxanhaltiger Polymere enthalten.

Eine oder mehrere der zuvor genannten zusätzlichen Komponenten, bevorzugt Parfüme, Emollients oder Insektrepellentien können jedoch auch in das Konzentrat eingearbeitet werden, d.h. Bestandteil des Konzentrats sein. Diese Komponenten können somit als Bestandteil des Konzentrats und/oder als separater Bestandteil in der erfindungsgemäßen Wasch- und Reinigungsformulierungen, insbesondere in Weichspülerformulierungen enthalten sein.

Die Mengen der jeweiligen Additive und Hilfsstoffe richten sich nach der beabsichtigten Verwendung. Typische Rahmenrezepturen für die jeweiligen Anwendungen sind bekannter Stand der Technik und sind beispielsweise in den Broschüren der Hersteller der jeweiligen Grund- und Wirkstoffe enthalten. Diese bestehenden Formulierungen können in der Regel unverändert übernommen werden. Im Bedarfsfall können zur Anpassung und Optimierung die gewünschten Modifizierungen aber durch einfache Versuche komplikationslos vorgenommen werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**D. Herstellungsbeispiele für Konzentrate:**

Allgemeine Anleitung:
Zur Herstellung der erfindungsgemäßen Konzentrate wurden die Komponenten A bis D sowie ggf. E und F in den in der nachfolgenden Tabelle 1 angegebenen Mengen miteinander bei Raumtemperatur ohne viel Energieaufwand verrührt. Alle Mengenangaben in Tabelle 1 sind Masseprozent bezogen auf die Gesamtmasse des Konzentrats. Es bildete sich in allen erfindungsgemäßen Beispielen ein klares Konzentrat.

Folgende Komponenten wurden verwendet:

Komponente A (organomodifiziertes Silikon):

- N-haltiges Polysiloxan (amino/guanidino-modifiziertes Siloxan - gemäß EP2557107A1) nachfolgend Polysiloxan 1 genannt,
- N-haltiges Polysiloxan (aminomodifiziertes Siloxan, ABIL SOFT AF 300, Aminopropyl Dimethicone, Evonik Nutrition & Care GmbH)
- Alkyl- und polyether-modifiziertes Siloxan (TEGOPREN 7009, Cetyl Dimethicone Copolyol, Evonik Nutrition & Care GmbH)
- Alkylmodifiziertes Siloxan (ABIL WAX 9840, Cetyl Dimethicone, Evonik Nutrition & Care GmbH)

Komponente B (Esteröl):

- REWOCARE DOC (Diethylhexyl Carbonat, Evonik Nutrition & Care GmbH);
- Tegosoft DEC (Diethylhexyl Carbonat, Evonik Nutrition & Care GmbH);
- Tegosoft M (Isopropyl Myristat, Evonik Nutrition & Care GmbH);
- Loxanol® MI 6460 (Isopropyllaurat, BASF)
- Tegosoft P (Isopropylpalmitat, Evonik Nutrition & Care GmbH)
- Isopropyloleat
- Rapsdiesel (Rapsmethylester)
- Olivenöl (Pflanzenöl)

Komponente C (Tensid):

- Tomadol 23-1 (ethoxylierter linearer Alkohol mit im Mittel 1 Ethylenoxidgruppe pro Molekül und Molmasse 238; Nichtionisches Tensid, Evonik Nutrition & Care GmbH)
- Tomadol 1-5 (ethoxylierter linearer Alkohol mit im Mittel 5 Ethylenoxidgruppen pro Molekül und Molmasse 392; Nichtionisches Tensid, Evonik Nutrition & Care GmbH)
- Tomadol 23-5 (ethoxylierter linearer Alkohol mit im Mittel 5 Ethylenoxidgruppen pro Molekül und Molmasse 401; Nichtionisches Tensid, Evonik Nutrition & Care GmbH)
- Tomadol 23-3 (Nichtionisches Tensid, Evonik Nutrition & Care GmbH)
- TEGO Alkanol TD 6 (Isotridecyl-6-ethoxylat; Evonik Nutrition & Care GmbH)
- Lial 123 (C12-C13-Alcohol; Firma Sasol)
- Tego Alkanol S2P (Steareth-2, Evonik Nutrition & Care GmbH)
- Tego STO V (Sorbitan Trioleate, Evonik Nutrition & Care GmbH)
- Tego SMO V (Sorbitan Oleate, Evonik Nutrition & Care GmbH)
- Lutensol TO 2 (ethoxylierter iso-C13-Alkohol mit im Mittel 2 Ethylenoxidgruppen, BASF)
- Tomadol 1200 (ethoxyliertes nichtionisches Tensid, Evonik Nutrition & Care GmbH)
- Tergitol 15-S-3 (ethoxyliertes Nichtionisches Tensid, Ethoxylat eines sekundären Alkohols, The Dow Company)

Tego Care PSC 3 (Polyglyceryl-3 Dicitrate/Stearate, Evonik Nutrition & Care GmbH)
Komponente D (Lösungsmittel):

- Propylenglycol n-Butyl Ether (Dowanol PnB; The Dow Company)
- Dipropylenglycol n-Butyl Ether (Dowanol DPnB; The Dow Company)
- Dipropylenglykolmonomethylether (Dowanol DPM; The Dow Company)
- Dipropyleneglycol n-Propyl Ether (Dowanol DPnP; The Dow Company)
- Isopropanol
- Hexylenglycol BDG (Diethylenglykolmonobutylether, Butyldiglykol, BASF)

Komponente E:

- Wasser

Komponente F (optionales Additiv):

- HCI-Lösung, 20 %ig in Wasser, nachfolgend HCI abgekürzt

**Tabelle 1**

| Komponente | B1 | B2 | B3 | B4 | B5 | B6 | B7 | B8 | B9 | B 10 |
|---|---|---|---|---|---|---|---|---|---|---|
| Polysiloxan 1 | 55 | 48 | 49,4 | 56,1 | 55,0 | 55,0 | 55,0 | 62,5 | 55,0 | 62,5 |
| Dowanol PnB | 12,5 | 12 | 12,3 | 1,7 | 12,5 | 12,5 | 12,5 | 5,0 | 12,5 | 5,0 |
| Tegosoft M | 25 | | | 31,0 | 25,0 | 25,0 | 25,0 | 25,0 | 25,0 | 25,0 |
| Rewocare DOC | | 28 | 24,8 | | | | | | | |
| Tomadol 23-1 | 7,5 | 12 | 12,3 | 11,2 | 5,0 | | | 7,5 | | |
| Tomadol 23-3 | | | | | 2,5 | | | | | |
| Tomadol 1-5 | | | | | | 2,5 | 1,0 | | | |
| Lial 123 | | | | | | 5,0 | 6,5 | | 6,5 | 6,5 |
| Tego Alkanol S2P | | | | | | | | | 1,0 | 1,0 |
| HCl, 20 %ig | | | 1,2 | | | | | | | |
| Summe | 100 | 100 | 100 | 100 | 100 | 100 | 100 | 100 | 100 | 100 |
| Aussehen direkt nach der Herstellung | klar | klar | klar | klar | klar | klar | Klar | klar | klar | klar |
| Stabilität in Wochen bei RT * | >56 | >17 | >2 | >4 | >42 | >57 | >56 | >56 | >4 | >4 |
| Stabilität in Wochen bei 40 °C* | >56 | >17 | >2 | >4 | >42 | >57 | >56 | >56 | >4 | >4 |

| | | | | | | | | | | |
|---|---|---|---|---|---|---|---|---|---|---|
| Aussehen nach Lagerung bei RT | klar | leicht opak | leicht trüb | klar | klar | klar | klar | klar | klar | klar |
| Aussehen nach Lagerung bei 40 °C | klar | leicht opak | trüb | klar | klar | klar | klar | klar | klar | klar |

* Stabilität bedeutet, dass die jeweilige Probe im angegebenen Zeitraum weder eine Phasenseparation noch eine sichtbare Gelbfärbung noch eine Viskositätserhöhung zeigte. Die in Tabelle 1 angegebenen Zeiträume sind die - bei noch laufenden Versuchen - bis zum Zeitpunkt der Einreichung der Patentanmeldung verstrichenen Zeiträume. Da alle Versuche noch laufen wird jeweils von einer deutlich längeren Stabilität ausgegangen.

**Tabelle 1** Fortsetzung

| Komponente | B11 | B12 | B13 | B14 | B15 | B16 |
|---|---|---|---|---|---|---|
| Polysiloxan 1 | 55 | 60 | 65 | 70 | 72,5 | 75 |
| Dowanol PnB | 12,5 | 12,5 | 12,5 | 12,5 | 10 | 7,5 |
| Tomadol 1-5 | 1 | 1 | 1 | 1 | 1 | 1 |
| Lial 123 | 6,5 | 6,5 | 6,5 | 6,5 | 6,5 | 6,5 |
| Loxanol MI 6460 | 25 | 20 | 15 | 10 | 10 | 10 |
| Summe | 100 | 100 | 100 | 100 | 100 | 100 |
| Aussehen direkt nach der Herstellung | klar | klar | klar | klar | klar | klar |
| Stabilität in Wochen bei RT* | >52 | >52 | >52 | >52 | >51 | >51 |
| Stabilität in Wochen bei 40°C* | >52 | >52 | >52 | >52 | >51 | >51 |
| Aussehen nach Lagerung bei RT | klar | klar | klar | klar | klar | klar |
| Aussehen nach Lagerung bei 40 °C | klar | klar | klar | klar | klar | klar |

* siehe Anmerkung zur Stabilität oben

**Tabelle 1** Fortsetzung

| Komponente | B17 | B18 | B19 | B20 | B21 | B22 |
|---|---|---|---|---|---|---|
| TEGOPREN 7009 | 60 | 70 | 75 | | | |
| ABIL Wax 9840 | | | | 60 | 70 | 75 |
| Dowanol PnB | 12,5 | 12,5 | 12,5 | 12,5 | 12,5 | 12,5 |
| Tomadol 1-5 | 1 | 1 | 1 | 1 | 1 | 1 |
| Lial 123 | 6,5 | 6,5 | 6,5 | 6,5 | 6,5 | 6,5 |
| Loxanol MI 6460 | 20 | 10 | 5 | 20 | 10 | 5 |
| Summe | 100 | 100 | 100 | 100 | 100 | 100 |
| Aussehen direkt nach der Herstellung | klar | klar | klar | klar | klar | klar |
| Stabilität in Wochen bei RT* | >51 | >51 | >50 | >50 | >50 | >50 |

| | | | | | | |
|---|---|---|---|---|---|---|
| Stabilität in Wochen bei 40°C* | >51 | >51 | >50 | >50 | >50 | >50 |
| Aussehen nach Lagerung bei RT | klar | klar | klar | klar | Klar | klar |
| Aussehen nach Lagerung bei 40 °C | klar | klar | klar | klar | klar | klar |

* siehe Anmerkung zu Stabilität oben

**Tabelle 1** Fortsetzung

| Komponente | B23 | B 24 | B 25 | B 26 | B 27 |
|---|---|---|---|---|---|
| ABIL Soft AF 300 | 60 | | | | |
| Polysiloxan 1 | | 65 | 70 | 65 | 70 |
| Dowanol PnB | 12,5 | | | | |
| Dowanol DPnB | | 12,5 | 12,5 | 12,5 | 12,5 |
| Tomadol 1-5 | 1 | 1 | 1 | 1 | 1 |
| Lial 123 | 6,5 | 6,5 | 6,5 | 6,5 | 6,5 |
| Isopropyllaurat | 20 | 15 | 10 | | |
| Isopropyloleat | | | | 15 | 10 |
| Summe | 100 | 100 | 100 | 100 | 100 |
| Aussehen direkt nach der Herstellung | klar | klar | klar | klar | klar |
| Stabilität in Wochen bei RT* | > 50 | > 49 | > 16 | > 16 | > 16 |
| Stabilität in Wochen bei 40°C* | > 50 | > 49 | > 16 | > 16 | > 16 |
| Aussehen nach Lagerung bei RT | klar | klar | klar | klar | klar |
| Aussehen nach Lagerung bei 40 °C | klar | klar | klar | klar | klar |

**Tabelle 1** Fortsetzung

| Komponente | B28 | B29 | B30 | B31 | B32 |
|---|---|---|---|---|---|
| Polysiloxan 1 | 41,7 | 41,5 | 49,2 | 48,2 | 27,2 |
| Dowanol PnB | 15,6 | 10,4 | 12,3 | 12,0 | 13,6 |
| Isopropanol | 10,4 | 10,4 | | | 25,2 |
| Tomadol 1200 | | | | | 3,4 |
| Tergitol 15-S-3 | 10,4 | | | | 6,8 |
| Tomadol 23-1 | | 5,2 | 12,3 | 12,0 | |
| Rewocare DOC | 20,8 | 31,1 | 24,6 | | 23,1 |
| Tegosoft M | | | | 27,7 | |
| 20%ige Salzsäure | 1,0 | 1,6 | 1,6 | | 0,7 |
| Summe | 100,0 | 100,0 | 100,0 | 100,0 | 100,0 |
| Aussehen direkt nach der Herstellung | klar | klar | klar | klar | klar |
| Stabilität in Wochen bei RT* | > 2 | > 2 | > 2 | > 2 | > 2 |
| Stabilität in Wochen bei 40°C* | - | - | > 2 | > 2 | - |
| Aussehen nach Lagerung bei RT | klar | klar | klar | klar | klar |

| Aussehen nach Lagerung bei 40 °C | - | - | klar | klar | - |
|---|---|---|---|---|---|

**Tabelle 1** Fortsetzung

| Komponente | B33 | B34 | B35 | B36 | B37 |
|---|---|---|---|---|---|
| Polysiloxan 1 | 55,0 | 60,0 | 60,0 | 60,0 | 60,0 |
| Dowanol PnB | 12,5 | 7,5 | | | |
| Dowanol DPnB | | | 12,5 | | |
| Dowanol DPM | | | | 12,5 | |
| Dowanol DPnP | | | | | 12,5 |
| Tomadol 1-5 | 1,0 | 1,0 | 1,0 | 1,0 | 1,0 |
| Lial 123 | 6,5 | 6,5 | 6,5 | 6,5 | 6,5 |
| Tegosoft P | 25,0 | | | | |
| Isopropyllaurat | | | 20,0 | 20,0 | 20,0 |
| Isopropyloleat | | 25,0 | | | |
| Summe | 100,0 | 100,0 | 100,0 | 100,0 | 100,0 |
| Aussehen bei RT | klar | klar | klar | klar | klar |
| Stabilität in Wochen bei RT* | > 2 | > 2 | > 45 | > 2 | > 45 |
| Stabilität in Wochen bei 40°C* | > 2 | > 2 | > 45 | > 2 | > 45 |
| Aussehen nach Lagerung bei RT | klar | klar | klar | klar | klar |
| Aussehen nach Lagerung bei 40 °C | klar | klar | klar | klar | klar |

**Tabelle 1** Fortsetzung

| Komponente | B38 | B39 | B40 | B41 | B42 |
|---|---|---|---|---|---|
| Polysiloxan 1 | 65,0 | 69,5 | 68,0 | 57,5 | 65,0 |
| Dowanol DPnB | | 13,4 | 12,5 | 12,5 | 12,5 |
| Isopropanol | 12,5 | | | | |
| Tomadol 1-5 | 1,0 | | | | 1,0 |
| Lial 123 | 6,5 | | 3,5 | | 6,5 |
| Lutensol TO2 | | | | 5,0 | |
| Tego STO V | | 1,1 | 1,0 | | |
| Isopropyllaurat | 15,0 | 16,0 | 15,0 | 25,0 | 13,0 |
| Rapsmethylester | | | | | 2 |
| Summe | 100,0 | 100,0 | 100,0 | 100,0 | 100,0 |
| Aussehen bei RT | klar | klar | klar | klar | klar |
| Stabilität in Wochen bei RT* | > 2 | > 2 | > 2 | > 2 | > 2 |
| Stabilität in Wochen bei 40°C* | - | > 2 | > 2 | > 2 | > 2 |
| Aussehen nach Lagerung bei RT | klar | klar | klar | klar | klar |
| Aussehen nach Lagerung bei 40 °C | - | klar | klar | klar | klar |

**Tabelle 1** Fortsetzung

| Komponente | B43 | B44 | B45 | B46 | B47 | B48 |
|---|---|---|---|---|---|---|
| Polysiloxan 1 | 41,5 | 41,5 | 41,5 | 41,5 | 65,0 | 65,0 |
| Dowanol PnB | 10,4 | 10,4 | 10,4 | 10,4 | | |
| Dowanol DPnB | | | | | 11,5 | 11,5 |
| Isopropanol | 10,4 | 10,4 | 10,4 | 10,4 | | |
| Hexylenglykol | | | | | | 1,0 |
| Butyldiglykol | | | | | 1,0 | |
| Tomadol 23-1 | 5,2 | 5,2 | 5,2 | 5,2 | | |
| Tomadol 1-5 | | | | | 1,0 | 1,0 |
| Lial 123 | | | | | 6,5 | 6,5 |
| Tegosoft DEC | 32,5 | 31,5 | 31,5 | 31,5 | | |
| Isopropyllaurat | | | | | 15,0 | 15,0 |
| Olivenöl | | 1,0 | | | | |
| Tego SMO | | | 1,0 | | | |
| Tego Care PSC 3 | | | | 1,0 | | |
| Aussehen bei RT | klar | klar | klar | klar | klar | klar |
| Stabilität in Wochen bei RT* | > 2 | > 2 | > 2 | > 2 | > 2 | > 2 |
| Stabilität in Wochen bei 40°C* | - | - | - | - | > 2 | > 2 |
| Aussehen nach Lagerung bei RT | klar | klar | klar | klar | klar | klar |
| Aussehen nach Lagerung bei 40 °C | - | - | - | - | klar | klar |

Vergleichsbeispiel

Als Vergleichsbeispiel wurde eine Mikroemulsion gemäß EP2557107A1 herangezogen. Die Zusammensetzung ist in Tabelle 2 angegeben.

**Tabelle 2**

| | Vergleichsbeispiel |
|---|---|
| Polysiloxan 1 | 43 |
| Tego Alkanol TD 6, | 16 |
| BDG | 8 |
| DPnB | 8 |
| Wasser | 25 |
| Summe | 100 |
| Aussehen direkt nach der Herstellung | klar |
| Stabilität in Wochen bei RT | 10 Wochen |
| Stabilität bei 40 °C | nach 3 Wochen trüb/zweiphasig |

Das Vergleichsbeispiel zeigt, dass Konzentrate gemäß EP2557107A1 bei höheren Temperaturen keine hinreichende Lagerstabilität aufweisen da eine Phasenseparation stattfand.

## E Anwendungsbeispiele

### E1 Herstellung der Weichspülerzusammensetzungen

Zur Herstellung der Weichspülerformulierungen für die Vergleichsbeispiele V1 und V2 wurde ein auf 50°C erwärmtes REWOQUAT WE 18 (Handelsname der Evonik Nutrition & Care GmbH, Triethanol basiertes Esterquat mit einem Aktivgehalt von 90 %) in der in Tabelle 3 angegebenen Menge unter Rühren zu der in Tabelle 3 angegebenen Menge auf 35 °C erwärmtes Leitungswasser und zur in Tabelle 3 angegebenen Menge 1 % iger Farbstofflösung gegeben. Danach wurde 20 min mit einem Propellerrührer bei 50 °C gerührt. Die Dispersion wurde innerhalb von ca. einer Stunde auf Raumtemperatur abgekühlt. Anschließend wurden 3 g Parfümöl bei Raumtemperatur hinzugegeben.

Im Vergleichsbeispiel V3 wurde wie bei V1 und V2 verfahren, jedoch wurde innerhalb von 20 min auf 30°C abgekühlt und dann im letzten Schritt neben dem Parfümöl nach eine Aminosiloxan-Mikroemulsion gemäß EP 2 557 107 A1 in der in Tabelle 3 angegebenen Menge zugegeben. Die Mikroemulsion hatte die in Tabelle 2 angegebene Zusammensetzung:

Erfindungsgemäße Weichspülerformulierungen W1 und W2 wurden analog V3 hergestellt, mit der Änderung, dass im letzten Schritt statt der Mikroemulsion gemäß Tabelle 2, erfindungsgemäße Konzentrate aus den Beispielen B1 und B2 zugegeben wurden. Die Zusammensetzungen der Weichspüler V1 bis V3 und W1 bis W2 sind in Tabelle 3 zusammengefasst:

**Tabelle 3:**

| % | V1 Konzentration WE 18 = 6% | V2 Konzentration WE 18 = 8% | V3 Konzentration WE 18 = 6% | W1 Konzentration WE 18 = 6% | W2 Konzentration WE 18 = 6% |
|---|---|---|---|---|---|
| REWOQUAT WE 18 | 33g | 44g | 33g | 33g | 33g |
| Leitungswasser | 462,8g | 451,8g | 455,7g | 457,3g | 456,5g |
| Farbstofflösung | 1,2 | 1,2 | 1,2 | 1,2 | 1,2 |
| Mikroemulsion | - | - | 0.6 | - | - |
| Konzentrat | - | - | - | 0.6 aus B1 | 0.6 aus B2 |
| Parfümöl | 3g | 3g | 3g | 3g | 3g |

### E2 Vorbehandlung des Baumwollgewebes

Baumwollfrottiergewebe (WFK Test Gewebe WFK 12 A) von einer Größe von 80 cm x 50 cm mit einem Flächengewicht von ca. 350 $g/m^2$ wurden zweimal mit Vollwaschmittel bei 40 °C gewaschen, zweimal gespült, geschleudert und einlagig auf einer Leine hängend an der Luft getrocknet.

### E3 Der Weichgriff

Zur Bestimmung der weichmachenden Wirkung der erfindungsgemäßen Konzentrate auf Textilien wurden die Baumwolltücher aus E2 mit den Weichspülern V1 - 3, W1 und W2 behandelt.

### E3.1 Behandlung des Baumwollgewebe

Die Weichspüler gemäß Tabelle 3 wurden jeweils mit kaltem Lietungswasser zur einer Spüllösung verdünnt, die 0,025 Gew.-% textilkonditionieraktive Substanzen enthielt.

Die Baumwolltücher wurden 10 min in zwei Liter der Spüllösung getaucht. Dabei ist zu beachten, dass die Tücher gleichmässig von der Spüllösung benetzt werden. Anschliessend wurden die Tücher geschleudert und bei Raumtemperatur einlagig auf einer Leine hängend getrocknet. Die behandelten Baumwollfrottiertücher wurden in 10 gleiche Stücke von 16 cm x 25 cm geschnitten.

### E3.2 Beurteilung der Weichgriffs

Zur Beurteilung des Weichgriffes wurde ein erfahrenes Team aus 9 Testpersonen zusammengestellt, das die

anonymisierten Griffmuster aus E3.1 mit Hilfe eines Handpaneltests bewertete. Dabei erhält jede Testperson ein eigenes Baumwolltuch. Die Beurteilung erfolgt dabei auf einer Skala von 0 (hart und unangenehm im Griff) bis 5 (weich und unangenehm im Griff) mit der Möglichkeit zu ganzzahligen Zwischenwerten. Zur Beurteilung des Weichgriffes wurden die Einzelbewertungen summiert, so dass sich bei 9 Testpersonen ein maximaler Weichgriff von 45 ergeben kann.

Bei den Griffmustern wurde zusätzlich immer eine nicht offensichtlich gekennzeichnete unbehandelte Probe (Blindwert) hinzugelegt.

Die Ergebnisse der Beurteilung des Weichgriffs sind in Tabelle 4 angegeben.

**Tabelle 4:** Zusammenfassung der Weichgriffsergebnisse

| Baumwollgewebe behandelt mit Weichspüler | Weichgriff |
|---|---|
| V1 | 29 |
| V2 | 34 |
| V3 | 34 |
| W1 | 31 |
| W2 | 34 |

Tabelle 4 zeigt, dass Weichspülerformulierungen W1 und W2 enthaltend 0,6 Gew. % der erfindungsgemäßen Konzentrate einen besseren Weichgriff aufweisen als der Weichspüler V1 ohne die erfindungsgemäßen Konzentrate. Um einen mit W2 vergleichbaren Weichgriff ohne Einsatz der erfindungsgemäßen Konzentrate zu erreichen musste die WE18 Konzentration in V2 im Vergleich zu V1 um 30% erhöht werden (V1: 6 Gew.% und V2: mit 8 Gew.%). Der Einsatz der erfindungsgemäßen Konzentrate ist somit deutlich effizienter.

**E4 Die Parfümretention**

Zur Bestimmung der Parfümretentionswirkung der Mikroemulsionen enthaltend Parfüm auf Textilien wurden Baumwolltücher damit behandelt.

**E4.1 Behandlung des Baumwollgewebes**

Baumwollgewebe wurde analog zu E3.1 behandelt.

**E2.3.2 Beurteilung der Parfümretention**

Zur Beurteilung der Parfümretention wurde ein erfahrenes Team aus 11 Testpersonen zusammengestellt, das die anonymisierten Geruchmuster der mit den Weichspülern V1, V3, W1 und W2 ausgerüsteten Baumwollgewebe mit Hilfe eines Geruchspaneltests bewertete. Dabei erhält jede Testperson ein eigenes Baumwolltuch. In einem Geruchspanel werden maximal zwei unterschiedliche Tücher untereinander bewertet. Die Beurteilung erfolgt dabei auf einer Skala von 1 (weniger intensiv) bis 2 (mehr intensiv) mit der Möglichkeit zu ganzzahligen Zwischenwerten in der Endsumme aller Testpersonen. Zur Beurteilung des Geruchs wurden die Einzelbewertungen summiert, so dass sich bei 11 Testpersonen ein maximaler Wert von 22 ergeben kann. Die Bewertung der Parfümretentionerfolgte 24 h nach der Behandlung der Textilien und nach 7 Tagen.

Die Ergebnisse sid in den Tabelle 5 zusammengefasst:

**Tabelle 5: Zusammenfassung der Ergebnisse der Parfümretention**

| Baumwollgewebe behandelt mit Weichspüler | Ergebnis der Parfümretention nach 24 h | Ergebnis der Parfümretention nach 7 Tagen |
|---|---|---|
| V1 | 14 | 12 |
| V3 | 18 | 16 |
| W1 | 18 | 18 |
| W2 | 19 | 18 |

Die Ergebnisse in Tabelle 5 zeigen, dass Weichspüler enthaltend die erfindungsgemäßen Konzentrate die

beste Parfümretention, insbesondere nach 7 Tagen aufweisen.

## Patentansprüche

1. Konzentrat,

   **dadurch gekennzeichnet, dass** es die Komponenten

   A) ein oder mehrere Polysiloxan(e),
   B) ein oder mehrere Ester- oder Mineralöl(e),
   C) ein oder mehrere nicht-ionische(s) Tensid(e),
   D) ein oder mehrere nicht-wässrige(s) Lösungsmittel,
   E) optional Wasser
   F) optional eine oder mehrere Säure(n)

   umfasst und dass der Gehalt an Komponenten E) und F) in Summe, bezogen auf das Gesamtgewicht der Konzentrate zwischen 0 und 5 Gew. % beträgt.

2. Konzentrat gemäß Anspruch 1,
   **dadurch gekennzeichnet, dass** es die Komponenten

   A) in einer Menge, in Summe aller enthaltenen Polysiloxane, von 20 Gew.-% bis 80 Gew.-%, bevorzugt 25 Gew.-% bis 80 Gew.-%, besonders bevorzugt 30 Gew.-% bis 80 Gew.-%, ganz besonders bevorzugt 40 Gew.-% bis 75 Gew.-%, und am meisten bevorzugt 45 Gew.-% bis 75 Gew.-%,
   B) in einer Menge, in Summe aller enthaltenen Ester- und Mineralöle, von 5 Gew.-% bis 50 Gew.-%, bevorzugt 5 Gew.-% bis 45 Gew.-%, besonders bevorzugt 5 Gew.-% bis 40 Gew.-%, ganz besonders bevorzugt 5 Gew.-% bis 35 Gew.-% und am meisten bevorzugt 10 Gew.-% bis 35 Gew.-%,
   C) in einer Menge, in Summe aller enthaltenen nicht-ionischen Tenside, von 1 Gew.-% bis 25 Gew.-%, bevorzugt 2 Gew.-% bis 20 Gew.-% besonders bevorzugt 2 Gew.-% bis 15 Gew.-% und ganz besonders bevorzugt 5 Gew.-% bis 15 Gew.-%,
   D) in einer Menge, in Summe aller enthaltenen Lösungsmittel, von 0,1 Gew.-% bis 50 Gew.-%, bevorzugt 0,1 Gew.-% bis 40 Gew.-%, besonders bevorzugt 0,1 Gew.-% bis 35 Gew.-%, ganz besonders bevorzugt 0,1 Gew.-% bis 30 Gew.-%, speziell bevorzugt 0,1 Gew.-% bis 25 Gew.-%, ganz speziell bevorzugt 0,5 Gew.-% bis 20 Gew.-% und am meisten bevorzugt 1 Gew.-% bis 15 Gew.-%,
   E) in einer Menge von 0 Gew.-% bis 3 Gew.-%, bevorzugt 0 Gew.-% bis 2 Gew.-%, besonders bevorzugt 0 Gew.-% bis 1 Gew.-%, ganz besonders bevorzugt 0 Gew.-% bis 0,5 Gew.-% und am meisten bevorzugt 0 Gew.-%, und
   F) in einer Menge, in Summe aller enthaltenen Säuren, von 0 Gew.-% bis 3 Gew.-%, bevorzugt 0 Gew.-% bis 2 Gew.-%, besonders bevorzugt 0 Gew.-% bis 1 Gew.-%, ganz besonders 0 Gew.-% bis 0,5 Gew.-% und am meisten bevorzugt 0 Gew.-%,

   enthält, wobei sich die Gew.-% auf die Gesamtzusammensetzung des Konzentrats beziehen und die Mengen der einzelnen Komponenten A) bis F) sowie optional weiterer Komponenten so gewählt werden, dass sie sich in Summe zu 100 Gew.-% des Konzentrats addieren.

3. Konzentrat gemäß Anspruch 1 oder 2,
   **dadurch gekennzeichnet,**
   **dass** es sich bei Komponente A) um ein Polysiloxan ausgewählt aus der Gruppe bestehend aus Polyethersiloxanen, aminofunktionellen Polysiloxanen, Polysiloxane mit langkettigen Alkylresten und Mischungen der genannten Polysiloxane handelt.

4. Konzentrat gemäß einem der vorhergehenden Ansprüche,

   **dadurch gekennzeichnet,**
   **dass** es sich bei Komponente A) um ein Polysiloxan gemäß Formel 1

   $$M_a\, D_b\, D^A_c\, D^B_d\, D^c_e\, T_f\, T^A_g\, Q_h \qquad \text{(Formel 1)}$$

handelt, wobei

| | |
|---|---|
| M | $= [R^2R^1_2SiO_{1/2}]$ |
| D | $= [R^1_2SiO_{2/2}]$ |
| $D^A$ | $= [R^1Si(R^7NHR^3)O_{2/2}]$ |
| $D^B$ | $= [R^1SiR^4O_{2/2}]$ |
| $D^C$ | $= [R^1SiR^5O_{2/2}]$ |
| T | $= [R^1SiO_{3/2}]$ |
| $T^A$ | $= [Si(CH_2CH_2CH_2NHR^3)O_{3/2}]$ |
| Q | $= [SiO_{4/2}]$ |

mit

$R^1$ unabhängig voneinander gleiche verschiedene, lineare oder verzweigte, gesättigte oder ungesättigte Kohlenwasserstoffreste mit 1 bis 30, bevorzugt 1 bis 18, besonders bevorzugt 1 bis 6, insbesondere bevorzugt 1 bis 3 Kohlenstoffatomen oder auch aromatische Kohlenwasserstoffreste mit 6 bis 30 Kohlenstoffatomen, bevorzugt Methyl oder Phenyl, besonders bevorzugt Methyl,
$R^2$ unabhängig voneinander gleich $R^1$, ein linearer oder verzweigter, gesättigter oder ungesättigter Alkoxyrest mit 1 bis 30, bevorzugt 1 bis 18, besonders bevorzugt 1 bis 6, insbesondere bevorzugt 1 bis 3 Kohlenstoffatomen oder eine Hydroxygruppe, bevorzugt $R^1$, besonders bevorzugt Methyl,
$R^3$ unabhängig voneinander Wasserstoff oder ein mit Stickstoffatomen substituierter Kohlenwasserstoffrest mit 1 bis 30, bevorzugt 1 bis 18, besonders bevorzugt 1 bis 6, insbesondere bevorzugt 1 bis 3 Kohlenstoffatomen, bevorzugt ein Aminoethylrest oder Wasserstoff, besonders bevorzugt Wasserstoff,
$R^4$ unabhängig voneinander gleiche oder verschiedene lineare oder verzweigte, gesättigte oder olefinisch ungesättigte Kohlenwasserstoffreste mit 8 bis 30 Kohlenstoffatomen, bevorzugt Decyl-, Dodecyl, Tetradecyl-, Hexadecyl-, Octadecyl-, besonders bevorzugt Hexadecyl- und Octadecyl-,
$R^5$ unabhängig voneinander gleiche oder verschiedene lineare oder verzweigte, gesättigte oder ungesättigte, polare hydroxysubstituierte Amidreste mit 1 bis 30 Kohlenstoffatomen und/oder lineare oder verzweigte, gesättigte oder ungesättigte, polare hydroxysubstituierte Harnstoffderivate mit 1 bis 30 Kohlenstoffatomen und/oder hydroxysubstituierte Carbamatreste mit 1 bis 30 Kohlenstoffatomen und/oder ethoxylierte Aminreste mit 1 bis 30 Kohlenstoffatomen und/oder Guanidinreste oder Alkylenylguanidinreste mit 1 bis 30 Kohlenstoffatomen,
$R^7$ unabhängig voneinander gleiche oder verschiedene lineare oder verzweigte, gesättigte oder ungesättigte, divalente Kohlenwasserstoffgruppe mit 1 bis 20 Kohlenstoffatomen, bevorzugt mit 1 bis 6 Kohlenstoffatomen, besonders bevorzugt-$C_2H_4$- und -$C_3H_6$-, am meisten bevorzugt -$C_3H_6$-,
a 2 - 20, bevorzugt 2 bis 10, besonders bevorzugt 2 bis 5, ganz besonders bevorzugt 2 bis 3 und am meisten bevorzugt 2,
b 10 bis 5000, bevorzugt 20 bis 2000, besonders bevorzugt 20 bis 1000,
c 1 bis 500, bevorzugt 1 bis 250, besonders bevorzugt 1 bis 100, ganz besonders bevorzugt 1 bis 50 und am meisten bevorzugt 1 bis 30,
d 0 bis 500, bevorzugt 0 bis 250, besonders bevorzugt 0 bis 100, ganz besonders bevorzugt 0 bis 50 und am meisten bevorzugt 0 bis 30,
e 0 bis 500, bevorzugt 0 bis 250, besonders bevorzugt 1 bis 100, ganz besonders bevorzugt 1 bis 50 und am meisten bevorzugt 1 bis 30,
f 0 bis 20, bevorzugt 0 bis 10, besonders bevorzugt 0 bis 5, ganz besonders bevorzugt 0 bis 2 und am meisten bevorzugt 0,
g 0 bis 20, bevorzugt 0 bis 10, besonders bevorzugt 0 bis 5, ganz besonders bevorzugt 0 bis 2 und am meisten bevorzugt 0,
h 0 bis 20, bevorzugt 0 bis 10, besonders bevorzugt 0 bis 5, ganz besonders bevorzugt 0 bis 2 und am meisten bevorzugt 0,

oder deren ionischen Addukte mit protischen Reaktanden $H^+A^-$.

**5.** Konzentrat gemäß Anspruch 4,
**dadurch gekennzeichnet,**

**dass** $R^5$ ausgewählt ist aus der Gruppe der Substituenten der Formeln 1a bis 1j,

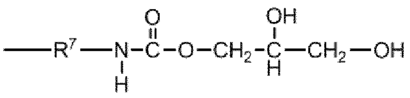

(1a)

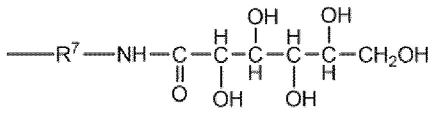

(1b)

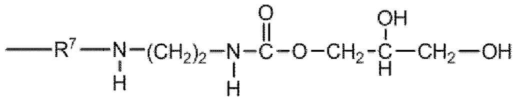

(1c)

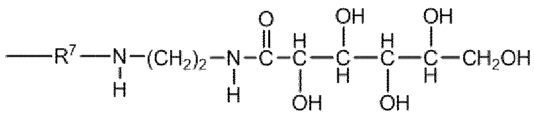

(1d)

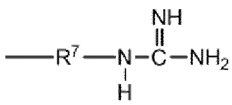

(1e)

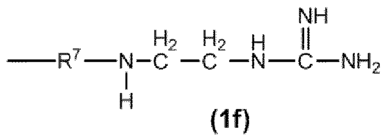

(1f)

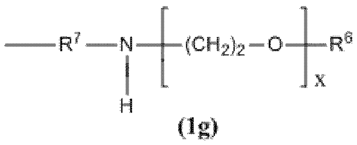

(1g)

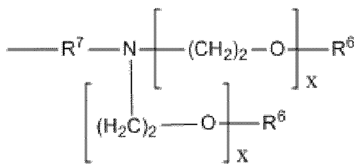

(1h)

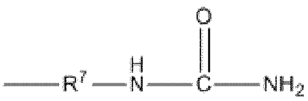

(1i)

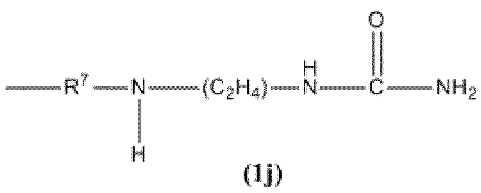

(1j)

mit

$R^6$ Wasserstoff, ein Kohlenwasserstoffrest, ein Acylrest, ein Carboxylatrest oder ein Carbamat- oder Carbonatrest, insbesondere Wasserstoff und $CH_3$-C(O) und x gleich 1 bis 20, bevorzugt 1 bis 10, besonders bevorzugt 1 bis 5 und insbesondere 1 bis 2 ist.

**6.** Konzentrat gemäß einem der Ansprüche 1 bis 3,

**dadurch gekennzeichnet,**
**dass** es sich bei Komponente A) um ein Polysiloxan gemäß Formel 2

$$M_i\, M^1_j\, D_k\, D^1_l\, D^2_m\, T_n\, Q_o \qquad \text{(Formel 2)}$$

handelt, wobei

M = $[R^2R^1{}_2SiO_{1/2}]$
$M^1$ = $[R^1R^{10}{}_2SiO_{1/2}]$
D = $[R^1{}_2SiO_{2/2}]$
$D^1$ = $[R^1R^{10}SiO_{2/2}]$
$D^2$ = $[R^1R^{13}SiO_{2/2}]$
T = $[R^1SiO_{3/2}]$
Q = $[SiO_{4/2}]$

mit

i 0 bis 20, bevorzugt 1 bis 10, besonders bevorzugt 2 bis 5, ganz besonders bevorzugt 2 bis 3 und am meisten bevorzugt 2,
j 0 bis 20, bevorzugt 0 bis 10, besonders bevorzugt 0 bis 5, ganz besonders bevorzugt 0 bis 2 und am meisten bevorzugt 0,
k 3 bis 450, bevorzugt 5 bis 350, besonders bevorzugt 10 bis 250,
l 0 bis 60, bevorzugt 0 bis 50, besonders bevorzugt 0 bis 40, ganz besonders bevorzugt 0bis 35 und am meisten bevorzugt 0 bis 30,
m 0 bis 60, bevorzugt 0 bis 50, besonders bevorzugt 0 bis 40, ganz besonders bevorzugt 0bis 35 und am meisten bevorzugt 0 bis 30,
n 0 bis 20, bevorzugt 0 bis 10, besonders bevorzugt 0 bis 5, ganz besonders bevorzugt 0 bis 2 und am meisten bevorzugt 0,
o 0 bis 20, bevorzugt 0 bis 10, besonders bevorzugt 0 bis 5, ganz besonders bevorzugt 0 bis 2 und am meisten bevorzugt 0,

wobei gilt, $i + j \geq 2$ sowie $N = i + j + k + l + m + n \leq 500$, $j + l + m \geq 1$,

$R^1$ unabhängig voneinander gleiche oder verschiedene lineare oder verzweigte, gesättigte oder ungesättigte Kohlenwasserstoffreste mit 1 bis 30 Kohlenstoffatomen oder auch aromatische Kohlenwasserstoffreste mit 6 bis 30 Kohlenstoffatomen, bevorzugt Methyl oder Phenyl, besonders bevorzugt Methyl,
$R^2$ unabhängig voneinander gleich $R^1$, ein Alkoxyrest oder eine Hydroxygruppe, bevorzugt $R^1$, besonders bevorzugt Methyl,
$R^{10}$ unabhängig voneinander gleiche oder verschiedene Polyetherreste, bevorzugt gleiche oder verschiedene Polyetherreste der allgemeinen Formel 3

$$\left[CH_2\right]_p O \left[CH_2CH_2O\right]_q \left[CH_2CH(CH_3)O\right]_r \left[CH(CH_3)CH_2O\right]_s \left[CR^{11}{}_2CR^{11}{}_2O\right]_t - R^{12}$$

Formel 3

mit

$R^{11}$ gleiche oder verschiedene Alkylreste 1 bis 18 Kohlenstoffatomen, die gegebenenfalls Etherfunktionen besitzen, oder Arylreste mit 6 - 18 Kohlenstoffatomen, die gegebenenfalls Etherfunktionen besitzen, oder Wasserstoff, bevorzugt Wasserstoff, Ethyl und Benzyl,
$R^{12}$ gleiche oder verschiedene Reste aus der Gruppe: $R^1$, Wasserstoff, $-C(O)R^1$, bevorzugt Methyl, Butyl, Wasserstoff oder $-C(O)CH_3$,
$R^{13}$ unabhängig voneinander gleiche oder verschiedene lineare oder verzweigte, gesättigte oder olefinisch ungesättigte Kohlenwasserstoffreste mit 8 bis 30 Kohlenstoffatomen, beispielsweise Decyl-, Dodecyl, Tetradecyl-, Hexadecyl-, Octadecyl-, insbesondere Hexadecyl- und Octadecyl-;
p 2 bis 18, bevorzugt 2 bis 10, besonders bevorzugt 2 bis 5, ganz besonders bevorzugt 3 bis 5 und am meisten bevorzugt 3,
q 0 bis 100, bevorzugt 0 bis 80, besonders bevorzugt 0 bis 70, ganz besonders bevorzugt 0 bis 60 und am meisten bevorzugt 0 bis 50,
r 0 bis 100, bevorzugt 0 bis 80, besonders bevorzugt 0 bis 70, ganz besonders bevorzugt 0 bis 60 und am

meisten bevorzugt 0 bis 50,
s 0 bis 100, bevorzugt 0 bis 80, besonders bevorzugt 0 bis 70, ganz besonders bevorzugt 0 bis 60 und am meisten bevorzugt 0 bis 50,
t 0 bis 80, bevorzugt 0 bis 40, besonders bevorzugt 0 bis 20, ganz besonders bevorzugt 0 bis 10 und am meisten bevorzugt 0,

mit der Maßgabe, dass $q + r + s + t \geq 3$.

**7.** Konzentrat gemäß mindestens einem der vorherigen Ansprüche,
**dadurch gekennzeichnet,**
**dass** es sich bei Komponente B) um Ester- oder Mineralöle handelt,

- Welche mit Wasser nicht-mischbar sind, d.h. dass bei Raumtemperatur wässrige Mischungen der Öle, bei Ölkonzentrationen von 0,5 - 99,5 vol.-% bezogen auf die Gesamtmischung, eine bereits mit dem menschlichen Auge wahrnehmbaren Trübung bzw. eine Ausbildung von zwei oder mehr Phasen aufweisen
und/oder
- Welche zu Wasser ein Grenzflächenspannung von > 5 mN/m aufweisen.

**8.** Konzentrat gemäß mindestens einem der vorherigen Ansprüche,
**dadurch gekennzeichnet,**
**dass** Komponente B) ausgewählt ist aus der Gruppe bestehend aus

- Estern von linearen und/oder verzweigten Fettsäuren mit linearen und/oder verzweigten ein- oder mehrwertigen Alkoholen, besonders bevorzugt Fettalkoholen,
- Mono-, Di- oder Triglyceriden in flüssiger oder fester Form,
- Estern von Carbonsäuren, aromatischen Carbonsäuren oder Dicarbonsäuren mit linearen oder verzweigten Fettalkoholen, unverzweigten oder verzweigten mehrwertigen Alkoholen oder unverzweigten oder verzweigten Alkoholen,
- Linearen, cyclischen oder verzweigten Kohlenwasserstoffen, mit oder ohne Substituenten, mit oder ohne Doppelbindungen,
- Pflanzlichen Ölen,
- Carbonaten mit unverzweigten oder verzweigten Alkoholen
- Mischungen zuvor genannter Ester- und Mineralöle.

**9.** Konzentrat gemäß mindestens einem der vorherigen Ansprüche,
**dadurch gekennzeichnet,**
**dass** Komponente C) ausgewählt ist aus der Gruppe bestehend aus

- Anlagerungsprodukten von Ethylenoxid und/oder Propylenoxid an lineare Fettalkohole, Fettsäuren, Fettsäureamide, Fettamine und an Alkylphenole, bevorzugt Fettalkoholethoxylate,
- Glycerinmono-, -di- und -triester und Sorbitanmono-, -di- und -triester von gesättigten und ungesättigten Fettsäuren und deren Ethylenoxidanlagerungsprodukte,
- Alkylmono- und -oligoglycoside und deren Ethylenoxidanlagerungsprodukte,
- Langkettige Fettalkohole mit einer mittleren Kettenlänge von 10 bis 24, bevorzugt 10 bis 18 Kohlenstoffatomen
- Partialester auf Basis linearer, verzweigter, ungesättigter bzw. gesättigter Fettsäuren, Ricinolsäure, 12-Hydroxystearinsäure, Polyglycerin, Pentaerythrit, Dipentaerythrit und Zuckeralkohole (z.B. Sorbit), Polyglucoside (z.B. Cellulose), Mono-, Di- und Trialkylphosphate sowie Mono-, Di- und/oder Tri-PEG-alkylphosphate und deren Salze, Zitronensäureester wie z.B. Glyceryl Stearate Citrate, Glyceryl Oleate Citrate und Dilauryl Citrate
- weiter alkoxylierte Triglyceride, Mischether bzw. Mischformale, gegebenenfalls partiell oxidierte Alkyloligoglykoside oder Alkenyloligoglykoside bzw. Glucoronsäurederivate, Fettsäure-N-alkylglucamide,
- Polyglycerinester
- Mischungen zuvor genannter nicht-ionischer Tenside.

**10.** Konzentrat gemäß mindestens einem der vorherigen Ansprüche,
**dadurch gekennzeichnet,**
**dass** es sich bei Komponente D) um ein hydrotropes, nicht-wässriges Lösungsmittel oder Mischungen von hydrotropen, nicht-wässrigen Lösungsmitteln handelt.

**11.** Konzentrat gemäß mindestens einem der vorherigen Ansprüche,
**dadurch gekennzeichnet,**
**dass** es sich bei Komponente D) um ein nicht-wässriges Lösungsmittel oder eine Mischungen von nicht-wässrigen Lösungsmitteln handelt, welche(s) ausgewählt ist/sind aus der Gruppe bestehend aus

- ein- und zweiwertigen aliphatischen Alkoholen, bevorzugt aliphatischen, linearen oder verzweigten, ein- oder zweiwertigen Alkoholen mit 1 bis 6 Kohlenstoffatomen, besonders bevorzugt Ethanol, Propanol oder Isopropylalkohol,
- Glycolether, bevorzugt Propylenglycol n-Butyl Ether, Dipropylenglycol n-Butyl Ether, Dipropylenglykolmonomethylether, Dipropyleneglycol n-Propyl Ether und Diethylenglycolmonobutylether,
- Polyole, bevorzugt mit 2 bis 15 Kohlenstoffatome und mindestens zwei Hydroxylgruppen, besonders bevorzugt Alkylenglycole, ganz besonders bevorzugt Ethylenglycol, Diethylenglycol, Propylenglycol, Isopropylenglykol, Butylenglycol, Pentylenglycol, Hexylenglycol, 1,2-Propandiol, 1,2-Butandiol, 1,2-Pentandiol, 1,2-Hexandiol sowie Polyethylenglycol oder Polypropylenglycol, Butyldiglycol.

**12.** Verfahren zur Herstellung von Wasch- und Reinigungsformulierungen, insbesondere von Weichspülerformulierungen, umfassend die Verfahrensschritte:

1) Bereitstellen eines erfindungsgemäßen Konzentrats,
2) Vermischen mit einer wasserhaltigen Phase, bevorzugt umfassend mindestens eine mehrere kationische textilweichmachende Verbindung, die eine oder mehrere langkettige Alkylgruppen in einem Molekül aufweist, bevorzugt ein quaternäres Ammoniumsalz, und/oder ein Konservierungsmittel und/oder mindestens ein Parfüm.

**13.** Verwendung eines Konzentrats nach einem der Ansprüche 1 bis 11 zur Herstellung von Wasch- und Reinigungsformulierungen, bevorzugt von Weichspülerformulierungen, oder als Wasch- und Reinigungsformulierung, bevorzugt als Weichspülerformulierung.

**Claims**

**1.** Concentrate,

**characterized in that** it comprises the components

A) one or more polysiloxanes,
B) one or more ester oils or mineral oils,
C) one or more nonionic surfactants
D) one or more nonaqueous solvents,
E) optionally water
F) optionally one or more acids

and **in that** the content of components E) and F) in total based on the overall weight of the concentrates is between 0 and 5% by weight.

**2.** Concentrate according to Claim 1,

**characterized in that** it contains the components

A) in an amount, in sum total of all polysiloxanes present, of 20% by weight to 80% by weight, preferably 25% by weight to 80% by weight, particularly preferably 30% by weight to 80% by weight, very particularly preferably 40% by weight to 75% by weight and most preferably 45% by weight to 75% by weight,
B) in an amount, in sum total of all ester oils and mineral oils present, of 5% by weight to 50% by weight, preferably 5% by weight to 45% by weight, particularly preferably 5% by weight to 40% by weight, very particularly preferably 5% by weight to 35% by weight and most preferably 10% by weight to 35% by weight,
C) in an amount, in sum total of all nonionic surfactants present, of 1% by weight to 25% by weight, preferably 2% by weight to 20% by weight, particularly preferably 2% by weight to 15% by weight and very particularly preferably 5% by weight to 15% by weight,
D) in an amount, in sum total of all solvents present, of 0.1% by weight to 50% by weight, preferably 0.1%

by weight to 40% by weight, particularly preferably 0.1% by weight to 35% by weight, very particularly preferably 0.1% by weight to 30% by weight, especially preferably 0.1% by weight to 25% by weight, very especially preferably 0.5% by weight to 20% by weight, and most preferably 1% by weight to 15% by weight,
E) in an amount of 0% by weight to 3% by weight, preferably 0% by weight to 2% by weight, particularly preferably 0% by weight to 1% by weight, very particularly preferably 0% by weight to 0.5% by weight and most preferably 0% by weight and
F) in an amount, in sum total of all acids present, of 0% by weight to 3% by weight, preferably 0% by weight to 2% by weight, particularly preferably 0% by weight to 1% by weight, very particularly 0% by weight to 0.5% by weight and most preferably 0% by weight,

wherein the % by weight values are based on the overall composition of the concentrate and the amounts of the individual components A) to F) and optionally further components are chosen such that in total they add up to 100% by weight of the concentrate.

3. Concentrate according to Claim 1 or 2,
**characterized in that**
component A) is a polysiloxane selected from the group consisting of polyether siloxanes, amino-functional polysiloxanes, polysiloxanes having long-chain alkyl radicals and mixtures of the polysiloxanes specified.

4. Concentrate according to any of the preceding claims,

**characterized in that**
component A) is a polysiloxane of formula 1

$$M_a\, D_b\, D^A{}_c\, D^B{}_d\, D^c{}_e\, T_f\, T^A{}_g\, Q_h \qquad \text{(formula 1)},$$

wherein

$M = [R^2\, R^1{}_2SiO_{1/2}]$
$D = [R^1{}_2SiO_{2/2}]$
$D^A = [R^1Si(R^7NHR^3)O_{2/2}]$
$D^B = [R^1SiR^4O_{2/2}]$
$D^C = [R^1SiR^5O_{2/2}]$
$T = [R^1SiO_{3/2}]$
$T^A = [Si(CH_2CH_2CH_2NHR^3)O_{3/2}]$
$Q = [SiO_{4/2}]$

where

$R^1$ are independently of one another identical or different, linear or branched, saturated or unsaturated hydrocarbon radicals having 1 to 30, preferably 1 to 18, particularly preferably 1 to 6, especially preferably 1 to 3 carbon atoms or else aromatic hydrocarbon radicals having 6 to 30 carbon atoms, preferably methyl or phenyl, particularly preferably methyl,
$R^2$ are independently of one another identical to $R^1$, a linear or branched, saturated or unsaturated alkoxy radical having 1 to 30, preferably 1 to 18, particularly preferably 1 to 6, especially preferably 1 to 3 carbon atoms or a hydroxyl group, preferably $R^1$, particularly preferably methyl,
$R^3$ are independently of one another hydrogen or a nitrogen-substituted hydrocarbon radical having 1 to 30, preferably 1 to 18, particularly preferably 1 to 6, especially preferably 1 to 3 carbon atoms, preferably an aminoethyl radical or hydrogen, particularly preferably hydrogen,
$R^4$ are independently of one another identical or different, linear or branched, saturated or olefinically unsaturated hydrocarbon radicals having 8 to 30 carbon atoms, preferably decyl-, dodecyl-, tetradecyl-, hexadecyl-, octadecyl-, particularly preferably hexadecyl- and octadecyl-,
$R^5$ are independently of one another identical or different, linear or branched, saturated or unsaturated polar hydroxyl-substituted amide radicals having 1 to 30 carbon atoms and/or linear or branched, saturated or unsaturated polar hydroxyl-substituted urea derivatives having 1 to 30 carbon atoms and/or hydroxyl-substituted carbamate radicals having 1 to 30 carbon atoms and/or ethoxylated amine radicals having 1 to

30 carbon atoms and/or guanidine radicals or alkylenylguanidine radicals having 1 to 30 carbon atoms, $R^7$ are independently of one another identical or different, linear or branched, saturated or unsaturated, divalent hydrocarbon groups having 1 to 20 carbon atoms, preferably having 1 to 6 carbon atoms, particularly preferably $-C_2H_4-$ and $-C_3H_6-$, most preferably $-C_3H_6-$,
a is 2 - 20, preferably 2 to 10, particularly preferably 2 to 5, very particularly preferably 2 to 3 and most preferably 2,
b is 10 to 5000, preferably 20 to 2000, particularly preferably 20 to 1000,
c is 1 to 500, preferably 1 to 250, particularly preferably 1 to 100, very particularly preferably 1 to 50 and most preferably 1 to 30,
d is 0 to 500, preferably 0 to 250, particularly preferably 0 to 100, very particularly preferably 0 to 50 and most preferably 0 to 30,
e is 0 to 500, preferably 0 to 250, particularly preferably 1 to 100, very particularly preferably 1 to 50 and most preferably 1 to 30,
f is 0 to 20, preferably 0 to 10, particularly preferably 0 to 5, very particularly preferably 0 to 2 and most preferably 0,
g is 0 to 20, preferably 0 to 10, particularly preferably 0 to 5, very particularly preferably 0 to 2 and most preferably 0,
h is 0 to 20, preferably 0 to 10, particularly preferably 0 to 5, very particularly preferably 0 to 2 and most preferably 0,

or ionic adducts thereof with protic reactants $H^+A^-$.

**5.** Concentrate according to Claim 4,

**characterized in that**
$R^5$ is selected from the group of the substituents of formulae 1a to 1j,

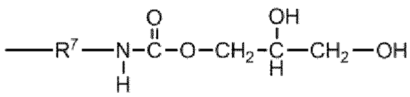

(1a)

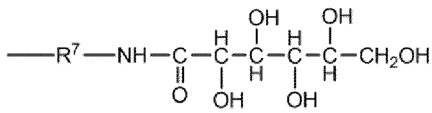

(1b)

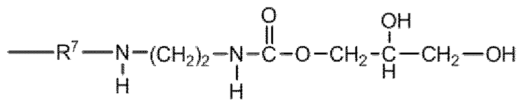

(1c)

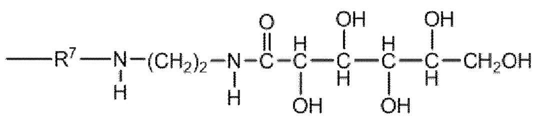

(1d)

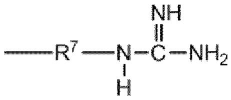

(1e)

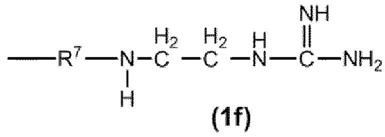

(1f)

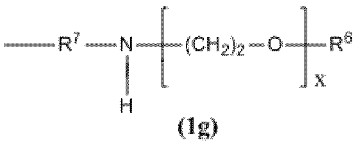

(1g)

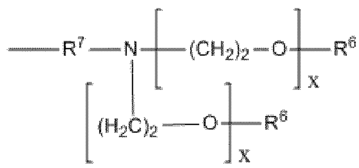

(1h)

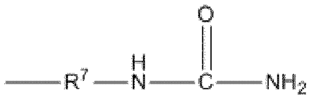

(1i)

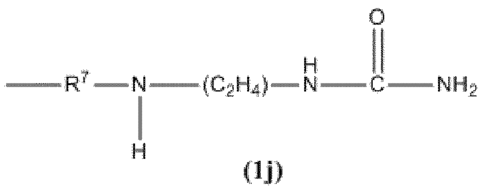

(1j)

where

$R^6$ is hydrogen, a hydrocarbon radical, an acyl radical, a carboxylate radical or a carbamate or carbonate radical, in particular hydrogen and $CH_3$-C(O), and x is equal to 1 to 20, preferably 1 to 10, particularly preferably 1 to 5 and in particular 1 to 2.

**6.** Concentrate according to any of Claims 1 to 3,

**characterized in that**
component A) is a polysiloxane of formula 2

$$M_i\ M^1_j\ D_k\ D^1_l\ D^2_m\ T_n\ Q_o \qquad \text{(formula 2)}$$

wherein

$M = [R^2 R^1_2SiO_{1/2}]$
$M^1 = [R^1R^{10}_2SiO_{1/2}]$
$D = [R^1_2SiO_{2/2}]$
$D^1 = [R^1R^{10}SiO_{2/2}]$
$D^2 = [R^1R^{13}SiO_{2/2}]$
$T = [R^1SiO_{3/2}]$
$Q = [SiO_{4/2}]$

where

i is 0 to 20, preferably 1 to 10, particularly preferably 2 to 5, very particularly preferably 2 to 3 and most preferably 2,
j is 0 to 20, preferably 0 to 10, particularly preferably 0 to 5, very particularly preferably 0 to 2 and most preferably 0,
k is 3 to 450, preferably 5 to 350, particularly preferably 10 to 250,
l is 0 to 60, preferably 0 to 50, particularly preferably 0 to 40, very particularly preferably 0 to 35 and most preferably 0 to 30,
m is 0 to 60, preferably 0 to 50, particularly preferably 0 to 40, very particularly preferably 0 to 35 and most preferably 0 to 30,
n is 0 to 20, preferably 0 to 10, particularly preferably 0 to 5, very particularly preferably 0 to 2 and most preferably 0,
o is 0 to 20, preferably 0 to 10, particularly preferably 0 to 5, very particularly preferably 0 to 2 and most preferably 0,

wherein $i + j \geq 2$ and $N = i + j + k + l + m + n \leq 500$, $j + l + m \geq 1$,

$R^1$ are independently of one another identical or different, linear or branched, saturated or unsaturated hydrocarbon radicals having 1 to 30 carbon atoms or else aromatic hydrocarbon radicals having 6 to 30 carbon atoms, preferably methyl or phenyl, particularly preferably methyl,
$R^2$ are independently of one another identical to $R^1$, an alkoxy radical or a hydroxyl group, preferably $R^1$, particularly preferably methyl,
$R^{10}$ are independently of one another identical or different polyether radicals, preferably identical or different polyether radicals of general formula 3

$$-\left[CH_2\right]_p-O-\left[CH_2CH_2O\right]_q-\left[CH_2CH(CH_3)O\right]_r-\left[CH(CH_3)CH_2O\right]_s-\left[CR^{11}{}_2CR^{11}{}_2O\right]_t-R^{12}$$

Formula 3

where

$R^{11}$ are identical or different alkyl radicals having 1 to 18 carbon atoms optionally having ether functions or aryl radicals having 6-18 carbon atoms optionally having ether functions or hydrogen, preferably hydrogen, ethyl and benzyl,
$R^{12}$ are identical or different radicals from the group: $R^1$, hydrogen, $-C(O)R^1$, preferably methyl, butyl, hydrogen or $-C(O)CH_3$,
$R^{13}$ are independently of one another identical or different, linear or branched, saturated or olefinically unsaturated hydrocarbon radicals having 8 to 30 carbon atoms, for example decyl-, dodecyl-, tetradecyl-, hexadecyl-, octadecyl-, in particular hexadecyl- and octadecyl-,
p is 2 to 18, preferably 2 to 10, particularly preferably 2 to 5, very particularly preferably 3 to 5 and most preferably 3,
q is 0 to 100, preferably 0 to 80, particularly preferably 0 to 70, very particularly preferably 0 to 60 and most preferably 0 to 50,
r is 0 to 100, preferably 0 to 80, particularly preferably 0 to 70, very particularly preferably 0 to 60 and most preferably 0 to 50,
s is 0 to 100, preferably 0 to 80, particularly preferably 0 to 70, very particularly preferably 0 to 60 and most preferably 0 to 50,
t is 0 to 80, preferably 0 to 40, particularly preferably 0 to 20, very particularly preferably 0 to 10 and most preferably 0,

with the proviso that $q + r + s + t \geq 3$.

**7.** Concentrate according to at least one of the preceding claims,
**characterized in that**
component B) is ester oils or mineral oils,

- which are immiscible with water, i.e. that at room temperature aqueous mixtures of the oils, at oil concentrations of 0.5-99.5% by volume, based on the total mixture, already have a cloudiness perceptible to the human eye or a formation of two or more phases
and/or
- which have an interfacial tension to water of > 5 mN/m.

**8.** Concentrate according to at least one of the preceding claims,
**characterized in that**
component B) is selected from the group consisting of

- esters of linear and/or branched fatty acids with linear and/or branched mono- or polyhydric alcohols, particularly preferably fatty alcohols,
- mono-, di- or triglycerides in liquid or solid form,
- esters of carboxylic acids, aromatic carboxylic acids or dicarboxylic acids with linear or branched fatty alcohols, unbranched or branched polyhydric alcohols or unbranched or branched alcohols,
- linear, cyclic or branched hydrocarbons, with or without substituents, with or without double bonds,
- vegetable oils,

- carbonates with unbranched or branched alcohols,
- mixtures of ester oils and mineral oils mentioned above.

**9.** Concentrate according to at least one of the preceding claims, **characterized in that**, component C) is selected from the group consisting of

- addition products of ethylene oxide and/or propylene oxide to linear fatty alcohols, fatty acids, fatty acid amides, fatty amines and to alkylphenols, preferably fatty alcohol ethoxylates,
- glycerol mono-, -di- and -triesters and sorbitan mono-, -di- and -triesters of saturated and unsaturated fatty acids and ethylene oxide addition products thereof,
- alkyl mono- and -oligoglycosides and ethylene oxide addition products thereof,
- long-chain fatty alcohols having a mean chain length of 10 to 24, preferably 10 to 18 carbon atoms
- partial esters based on linear, branched, unsaturated or saturated fatty acids, ricinoleic acid, 12-hydroxystearic acid, polyglycerol, pentaerythritol, dipentaerythritol and sugar alcohols (e.g. sorbitol), polyglucosides (e.g. cellulose), mono-, di- and trialkyl phosphates and also mono-, di- and/or tri-PEG-alkyl phosphates and salts thereof, citric acid esters such as glyceryl stearate citrate, glyceryl oleate citrate and dilauryl citrate
- further alkoxylated triglycerides, mixed ethers and mixed formulas, optionally partially oxidized alkyl oligoglycosides or alkenyl oligoglycosides or glucoronic acid derivatives, fatty acid N-alkylglucamides,
- polyglycerol esters
- mixtures of nonionic surfactants specified above.

**10.** Concentrate according to at least one of the preceding claims, **characterized in that**, component D) is a hydrotropic, non-aqueous solvent or mixtures of hydrotropic, non-aqueous solvents.

**11.** Concentrate according to at least one of the preceding claims, **characterized in that**, component D) is a non-aqueous solvent or a mixture of non-aqueous solvents selected from the group consisting of

- mono- and dihydric aliphatic alcohols, preferably aliphatic, linear or branched, mono- or dihydric alcohols having 1 to 6 carbon atoms, particularly preferably ethanol, propanol or isopropyl alcohol,
- glycol ethers, preferably propylene glycol n-butyl ether, dipropylene glycol n-butyl ether, dipropylene glycol monomethyl ether, dipropylene glycol n-propyl ether and diethylene glycol monobutyl ether,
- polyols, preferably having 2 to 15 carbon atoms and at least two hydroxyl groups, particularly preferably alkylene glycols, very particularly preferably ethylene glycol, diethylene glycol, propylene glycol, isopropylene glycol, butylene glycol, pentylene glycol, hexylene glycol, 1,2-propanediol, 1,2-butanediol, 1,2-pentanediol, 1,2-hexanediol and also polyethylene glycol or polypropylene glycol, butyl diglycol.

**12.** Process for producing laundry or cleaning formulations, in particular fabric softener formulations, comprising the process steps of:

1) providing a concentrate according to the invention,
2) mixing with a water-containing phase, preferably comprising at least one more cationic, fabricsoftening compound comprising one or more long-chain alkyl groups in a molecule, preferably a quaternary ammonium salt and/or a preservative and/or at least one perfume.

**13.** Use of a concentrate according to any of Claims 1 to 11 for producing laundry and cleaning formulations, preferably fabric softener formulations, or as a laundry and cleaning formulation, preferably as a fabric softener formulation.

## Revendications

**1.** Concentrat, **caractérisé en ce qu'**il comprend les composants

A) un ou plusieurs polysiloxane(s),
B) une ou plusieurs huile(s) d'ester ou huile(s) minérale(s),
C) un ou plusieurs agent(s) tensioactif(s) non ionique(s),

D) un ou plusieurs solvant(s) non aqueux,
E) éventuellement de l'eau,
F) éventuellement un ou plusieurs acide(s)

et **en ce que** la somme des teneurs en constituants E) et F), par rapport au poids total des concentrats, est située entre 0 et 5% en poids.

**2.** Concentrat selon la revendication 1, **caractérisé en ce qu'**il comprend les composants

A) en une quantité, représentant la somme de tous les polysiloxanes contenus, de 20% en poids à 80% en poids, de préférence de 25% en poids à 80% en poids, de manière particulièrement préférée de 30% en poids à 80% en poids, de manière tout particulièrement préférée de 40% en poids à 75% en poids et le plus préférablement de 45% en poids à 75% en poids,
B) en une quantité, représentant la somme de toutes les huiles d'ester et huiles minérales contenues, de 5% en poids à 50% en poids, de préférence de 5% en poids à 45% en poids, de manière particulièrement préférée de 5% en poids à 40% en poids, de manière tout particulièrement préférée de 5% en poids à 35% en poids et le plus préférablement de 10% en poids à 35% en poids,
C) en une quantité, représentant la somme de tous les agents tensioactifs non ioniques contenus, de 1% en poids à 25% en poids, de préférence de 2% en poids à 20% en poids, de manière particulièrement préférée de 2% en poids à 15% en poids et de manière tout particulièrement préférée de 5% en poids à 15% en poids,
D) en une quantité, représentant la somme de tous les solvants contenus, de 0,1% en poids à 50% en poids, de préférence de 0,1% en poids à 40% en poids, de manière particulièrement préférée de 0,1% en poids à 35% en poids, de manière tout particulièrement préférée de 0,1% en poids à 30% en poids, de manière spécialement préférée de 0,1% en poids à 25% en poids, de manière tout spécialement préférée de 0,5% en poids à 20% en poids et le plus préférablement de 1% en poids à 15% en poids,
E) en une quantité de 0% en poids à 3% en poids, de préférence de 0% en poids à 2% en poids, de manière particulièrement préférée de 0% en poids à 1% en poids, de manière tout particulièrement préférée de 0% en poids à 0,5% en poids et le plus préférablement de 0% en poids et
F) en une quantité, représentant la somme de tous les acides contenus, de 0% en poids à 3% en poids, de préférence de 0% en poids à 2% en poids, de manière particulièrement préférée de 0% en poids à 1% en poids, de manière tout particulièrement préférée de 0% en poids à 0,5% en poids et le plus préférablement de 0% en poids,

les % en poids se rapportant à la composition totale du concentrat et les quantités des différents composants A) à F) ainsi qu'éventuellement d'autres composants étant choisies de manière telle que leur somme représente 100% en poids du concentrat.

**3.** Concentrat selon la revendication 1 ou 2, **caractérisé en ce qu'**il s'agit, pour le composant A), d'un polysiloxane choisi dans le groupe constitué par les polyéthersiloxanes, les polysiloxanes aminofonctionnels, les polysiloxanes présentant des radicaux alkyle à longue chaîne et les mélanges des polysiloxanes mentionnés.

**4.** Concentrat selon l'une quelconque des revendications précédentes, **caractérisé en ce qu'**il s'agit, pour le composant (A), d'un polysiloxane selon la formule 1

$$M_a\, D_b\, D^A{}_c\, D^B{}_d\, T_f\, T^A{}_g\, Q_h \qquad \text{(Formule 1)}$$

dans laquelle

$M = [R^2R^1{}_2SiO_{1/2}]$
$D = [R^1{}_2SiO_{2/2}]$
$D^A = [R^1Si(R^7HR^3)O_{2/2}]$
$D^B = [R^1SiR^4Q_{2/2}]$
$D^C = [R^1SiR^5O_{2/2}]$
$T = [R^1SiO_{3/2}]$
$T^A = [Si(CH_2CH_2CH_2NHR^3)O_{3/2}]$
$Q = [SiO_{4/2}]$

où

$R^1$ représente, indépendamment, des radicaux hydrocarbonés identiques ou différents, linéaires ou ramifiés, saturés ou insaturés comprenant 1 à 30, de préférence 1 à 18, de manière particulièrement préférée 1 à 6, en particulier de préférence 1 à 3 atomes de carbone ou également des radicaux hydrocarbonés aromatiques comprenant 6 à 30 atomes de carbone, de préférence méthyle ou phényle, de manière particulièrement préférée méthyle,
$R^2$ représente, indépendamment, $R^1$, un radical alcoxy linéaire ou ramifié, saturé ou insaturé comprenant 1 à 30, de préférence 1 à 18, de manière particulièrement préférée 1 à 6, en particulier de préférence 1 à 3 atomes de carbone ou un groupe hydroxy, de préférence $R^1$, de manière particulièrement préférée méthyle,
$R^3$ représente, indépendamment, hydrogène ou un radical hydrocarboné substitué par des atomes d'azote comprenant 1 à 30, de préférence 1 à 18, de manière particulièrement préférée 1 à 6, en particulier de préférence 1 à 3 atomes de carbone, de préférence un radical aminoéthyle ou hydrogène, de manière particulièrement préférée hydrogène,
$R^4$ représente, indépendamment, des radicaux hydrocarbonés identiques ou différents, linéaires ou ramifiés, saturés ou oléfiniquement insaturés, comprenant 8 à 30 atomes de carbone, de préférence décyle, dodécyle, tétradécyle, hexadécyle, octadécyle, de manière particulièrement préférée hexadécyle et octadécyle,
$R^5$ représente, indépendamment, des radicaux amide identiques ou différents, linéaires ou ramifiés, saturés ou insaturés, polaires, substitués par hydroxy comprenant 1 à 30 atomes de carbone et/ou des dérivés d'urée linéaires ou ramifiés, saturés ou insaturés, polaires, substitués par hydroxy, comprenant 1 à 30 atomes de carbone et/ou des radicaux carbamate substitués par hydroxy comprenant 1 à 30 atomes de carbone et/ou des radicaux amine éthoxylés comprenant 1 à 30 atomes de carbone et/ou des radicaux guanidine ou alkylénylguanidine comprenant 1 à 30 atomes de carbone,
$R^7$ représente, indépendamment, des groupes hydrocarbonés identiques ou différents, linéaires ou ramifiés, saturés ou insaturés, divalents comprenant 1 à 20 atomes de carbone, de préférence 1 à 6 atomes de carbone, de manière particulièrement préférée $-C_2H_4-$ et $-C_3H_6-$, le plus préférablement $-C_3H_6-$,

a vaut 2-20, de préférence 2 à 10, de manière particulièrement préférée 2 à 5, de manière tout particulièrement préférée 2 à 3 et le plus préférablement 2,
b vaut 10 à 5000, de préférence 20 à 2000, de manière particulièrement préférée 20 à 1000,
c vaut 1 à 500, de préférence 1 à 250, de manière particulièrement préférée 1 à 100, de manière tout particulièrement préférée 1 à 50 et le plus préférablement 1 à 30,
d vaut 0 à 500, de préférence 0 à 250, de manière particulièrement préférée 0 à 100, de manière tout particulièrement préférée 0 à 50 et le plus préférablement 0 à 30,
e vaut 0 à 500, de préférence 0 à 250, de manière particulièrement préférée 1 à 100, de manière tout particulièrement préférée 1 à 50 et le plus préférablement 1 à 30,
f vaut 0 à 20, de préférence 0 à 10, de manière particulièrement préférée 0 à 5, de manière tout particulièrement préférée 0 à 2 et le plus préférablement 0,
g vaut 0 à 20, de préférence 0 à 10, de manière particulièrement préférée 0 à 5, de manière tout particulièrement préférée 0 à 2 et le plus préférablement 0,
h vaut 0 à 20, de préférence 0 à 10, de manière particulièrement préférée 0 à 5, de manière tout particulièrement préférée 0 à 2 et le plus préférablement 0,

ou de ses produits d'addition ionique avec des réactifs protiques $H^+A^-$.

**5.** Concentrat selon la revendication 4, **caractérisé en ce que** $R^5$ est choisi dans le groupe des substituants des formules la à 1j,

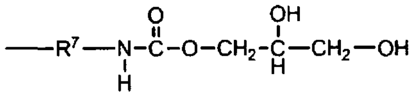

**(1a)**

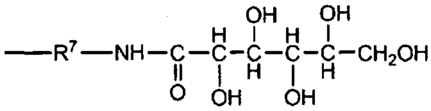

**(1b)**

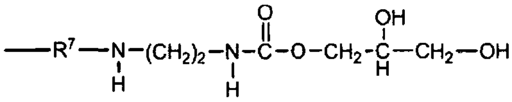

**(1c)**

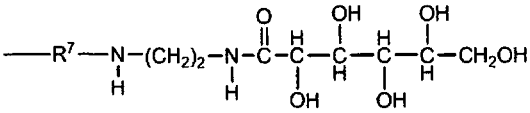

**(1d)**

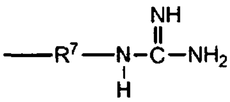

**(1e)**

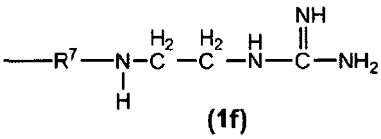

**(1f)**

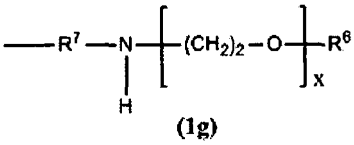

**(1g)**

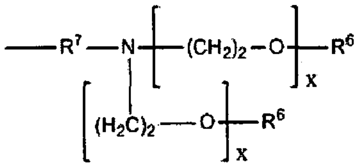

**(1h)**

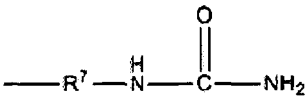

**(1i)**

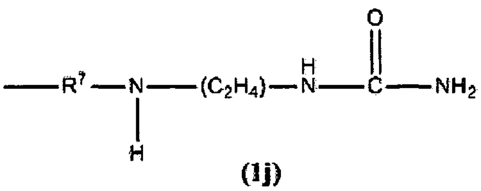

**(1j)**

dans lesquelles

$R^6$ représente hydrogène, un radical hydrocarboné, un radical acyle, un radical carboxylate ou un radical carbamate ou carbonate, en particulier hydrogène et $CH_3$-C(O) et x vaut 1 à 20, de préférence 1 à 10, de manière particulièrement préférée 1 à 5 et en particulier 1 à 2.

**6.** Concentrat selon l'une quelconque des revendications 1 à 3, **caractérisé en ce qu'**il s'agit, pour le composant (A), d'un polysiloxane selon la formule 2

$$M_i\, M^1_j\, D_k\, D^1_l\, D^2_m\, T_n\, Q_o \qquad \text{(Formule 2)}$$

dans laquelle

$M = [R^2R^1_2SiO_{1/2}]$
$M^1 = [R^1R^{10}_2SiO_{1/2}]$
$D = [R^1_2SiO_{2/2}]$
$D^1 = [R^1R^{10}SiO_{2/2}]$
$D^2 = [R^1R^{13}SiO_{2/2}]$
$T = [R^1SiO_{3/2}]$
$Q = [SiO_{4/2}]$

où

i vaut 0 à 20, de préférence 1 à 10, de manière particulièrement préférée 2 à 5, de manière tout particulièrement préférée 2 à 3 et le plus préférablement 2,
j vaut 0 à 20, de préférence 0 à 10, de manière particulièrement préférée 0 à 5, de manière tout particulièrement préférée 0 à 2 et le plus préférablement 0,
k vaut 3 à 450, de préférence 5 à 350, de manière particulièrement préférée 10 à 250,
l vaut 0 à 60, de préférence 0 à 50, de manière particulièrement préférée 0 à 40, de manière tout particulièrement préférée 0 à 35 et le plus préférablement 0 à 30,
m vaut 0 à 60, de préférence 0 à 50, de manière particulièrement préférée 0 à 40, de manière tout particulièrement préférée 0 à 35 et le plus préférablement 0 à 30,
n vaut 0 à 20, de préférence 0 à 10, de manière particulièrement préférée 0 à 5, de manière tout particulièrement préférée 0 à 2 et le plus préférablement 0,
o vaut 0 à 20, de préférence 0 à 10, de manière particulièrement préférée 0 à 5, de manière tout particulièrement préférée 0 à 2 et le plus préférablement 0,

où $i + j \geq 2$ et $N = i + j + k + l + m + n \leq 500$, $j + l + m \geq 1$,

$R^1$ représente, indépendamment, des radicaux hydrocarbonés identiques ou différents, linéaires ou ramifiés, saturés ou insaturés comprenant 1 à 30 atomes de carbone ou également des radicaux hydrocarbonés aromatiques comprenant 6 à 30 atomes de carbone, de préférence méthyle ou phényle, de manière particulièrement préférée méthyle,
$R^2$ représente, indépendamment, $R^1$, un radical alcoxy ou un groupe hydroxy, de préférence $R^1$, de manière particulièrement préférée méthyle,
$R^{10}$ représente, indépendamment, des radicaux polyéther identiques ou différents, de préférence des radicaux polyéther identiques ou différents de formule générale 3

$$\left[CH_2\right]_p O \left[CH_2CH_2O\right]_q \left[CH_2CH(CH_3)O\right]_r \left[CH(CH_3)CH_2O\right]_s \left[CR^{11}{}_2CR^{11}{}_2O\right]_t R^{12}$$

Formule 3

dans laquelle

$R^{11}$ représente des radicaux alkyle identiques ou différents, comprenant 1 à 18 atomes de carbone, qui possèdent le cas échéant des fonctions éther, ou des radicaux aryle comprenant 6-18 atomes de carbone, qui possèdent le cas échéant des fonctions éther, ou hydrogène, de préférence hydrogène, éthyle et benzyle,
$R^{12}$ représente des radicaux identiques ou différents du groupe formé par : $R^1$, hydrogène, $-C(O)R^1$, de préférence méthyle, butyle, hydrogène ou $-C(O)CH_3$,
$R^{13}$ représente, indépendamment, des radicaux hydrocarbonés identiques ou différents, linéaires ou ramifiés, saturés ou oléfiniquement insaturés, comprenant 8 à 30 atomes de carbone, par exemple décyle, dodécyle, tétradécyle, hexadécyle, octadécyle, en particulier hexadécyle et octadécyle ;
p vaut 2 à 18, de préférence 2 à 10, de manière particulièrement préférée 2 à 5, de manière tout particulièrement préférée 3 à 5 et le plus préférablement 3,
q vaut 0 à 100, de préférence 0 à 80, de manière particulièrement préférée 0 à 70, de manière tout particulièrement préférée 0 à 60 et le plus préférablement 0 à 50,
r vaut 0 à 100, de préférence 0 à 80, de manière particulièrement préférée 0 à 70, de manière tout particulièrement préférée 0 à 60 et le plus préférablement 0 à 50,
s vaut 0 à 100, de préférence 0 à 80, de manière particulièrement préférée 0 à 70, de manière tout particulièrement préférée 0 à 60 et le plus préférablement 0 à 50,
t vaut 0 à 80, de préférence 0 à 40, de manière particulièrement préférée 0 à 20, de manière tout particulièrement préférée 0 à 10 et le plus préférablement 0,

à condition que $q + r + s + t \geq 3$.

**7.** Concentrat selon au moins l'une quelconque des revendications précédentes, **caractérisé en ce qu'**il s'agit, pour le composant B), d'huiles d'ester ou d'huiles minérales,

- qui ne sont pas miscibles avec l'eau, c'est-à-dire que des mélanges aqueux des huiles, à température ambiante, à des concentrations en huile de 0,5-99,5% en volume par rapport au mélange total, présentent un trouble pouvant déjà être observé à l'œil humain ou une formation de deux phases ou plus et/ou
- qui présentent une tension superficielle par rapport à l'eau > 5 mN/m.

**8.** Concentrat selon au moins l'une quelconque des revendications précédentes, **caractérisé en ce que** le composant B) est choisi dans le groupe constitué par

- les esters d'acides gras linéaires et/ou ramifiés avec des alcools linéaires et/ou ramifiés, monovalents ou polyvalents, de manière particulièrement préférée des alcools gras,
- les monoglycérides, les diglycérides ou les triglycérides sous forme liquide ou solide,
- les esters d'acides carboxyliques, d'acides carboxyliques aromatiques ou d'acides dicarboxyliques avec des alcools gras linéaires ou ramifiés, des alcools polyvalents non ramifiés ou ramifiés ou des alcools non ramifiés ou ramifiés,
- les hydrocarbures linéaires, cycliques ou ramifiés avec ou sans substituants, avec ou sans doubles liaisons,
- les huiles végétales,
- les carbonates avec des alcools non ramifiés ou ramifiés,
- les mélanges des huiles d'ester et des huiles minérales susmentionnées.

**9.** Concentrat selon au moins l'une quelconque des revendications précédentes, **caractérisé en ce que** le composant C) est choisi dans le groupe constitué par

- les produits d'addition d'oxyde d'éthylène et/ou d'oxyde de propylène sur des alcools gras linéaires, des acides gras, des amides d'acides gras, des amines grasses et sur des alkylphénols, de préférence les éthoxylates d'alcool gras,
- les monoesters, les diesters et les triesters de glycérol et les monoesters, les diesters et les triesters de sorbitane d'acides gras saturés et insaturés et leurs produits d'addition d'oxyde d'éthylène,
- les alkylmonoglycosides et les alkyloligoglycosides et leurs produits d'addition d'oxyde d'éthylène,
- les alcools gras à longue chaîne, présentant une longueur moyenne de chaîne de 10 à 24, de préférence de 10 à 18 atomes de carbone,
- les esters partiels à base d'acides gras linéaires, ramifiés, insaturés ou saturés, l'acide ricinoléique, l'acide 12-hydroxystéarique, le polyglycérol, le pentaérythritol, le dipentaérythritol et les alcools de sucre (par exemple le sorbitol), les polyglucosides (par exemple la cellulose), les phosphates de monoalkyle, de dialkyle et de trialkyle ainsi que les phosphates de mono-PEG-alkyle, de di-PEG-alkyle et/ou de tri-PEG-alkyle et leurs sels, les esters d'acide citrique comme par exemple le stéarate-citrate de glycéryle, l'oléate-citrate de glycéryle et le citrate de dilauryle,
- d'autres triglycérides, éthers mixtes ou formules mixtes alcoxylés, les alkyloligoglycosides ou les alcényloligoglycosides le cas échéant partiellement oxydés ou les dérivés de l'acide glucuronique, les N-alkylglucamides d'acides gras,
- les esters de polyglycérol,
- les mélanges des agents tensioactifs non ioniques susmentionnés.

**10.** Concentrat selon au moins l'une quelconque des revendications précédentes, **caractérisé en ce qu'**il s'agit, pour le composant D), d'un solvant hydrotrope, non aqueux ou de mélanges de solvants hydrotropes, non aqueux.

**11.** Concentrat selon au moins l'une quelconque des revendications précédentes, **caractérisé en ce qu'**il s'agit, pour le composant D), d'un solvant non aqueux ou d'un mélange de solvants non aqueux, qui est/sont choisi(s) dans le groupe constitué par

- les alcools aliphatiques monovalents et divalents, de préférence les alcools aliphatiques, linéaires ou ramifiés, monovalents ou divalents, comprenant 1 à 6 atomes de carbone, de manière particulièrement préférée l'éthanol, le propanol ou l'alcool isopropylique,
- les glycoléthers, de préférence le propylèneglycol-n-butyléther, le dipropylèneglycol-n-butyléther, le dipropylèneglycolmonométhyléther, le dipropylèneglycol-n-propyléther et le diéthylèneglycolmonobutyléther,
- les polyols, comprenant de préférence 2 à 15 atomes de carbone et au moins deux groupes hydroxyle, de manière particulièrement préférée les alkylèneglycols, de manière tout particulièrement préférée l'éthylèneglycol, le diéthylèneglycol, le propylèneglycol, l'isopropylèneglycol, le butylèneglycol, le pentylèneglycol, l'hexylèneglycol, le 1,2-propanediol, le 1,2-butanediol, le 1,2-pentanediol, le 1,2-hexanediol ainsi que le polyéthylèneglycol ou le polypropylèneglycol, le butyldiglycol.

**12.** Procédé de préparation de formulations de lavage et de nettoyage, en particulier de formulations d'adoucissant, comprenant les étapes de procédé :

1) mise à disposition d'un concentrat selon l'invention,
2) mélange avec une phase aqueuse, comprenant de préférence au moins un plusieurs composé assouplissant de textile, cationique, qui présente un ou plusieurs groupes alkyle à longue chaîne dans une molécule, de préférence un sel d'ammonium quaternaire et/ou un conservateur et/ou au moins un parfum.

**13.** Utilisation d'un concentrat selon l'une quelconque des revendications 1 à 11 pour la préparation de formulations de lavage et de nettoyage, de préférence de formulations d'assouplissant ou comme formulations de lavage et de nettoyage, de préférence comme formulations d'assouplissant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2557107 A1
- EP 2444447 A2
- WO 2008040785 A1
- WO 02088456 A1
- JP 2002167437 A
- EP 1972330 A1
- EP 0596304 A
- EP 0559013 A
- EP 2301987 A
- EP 2000123 A1
- US 20100184634 A
- DE 19751151 A1
- WO 2007125005 A


### In der Beschreibung aufgeführte Nicht-Patentliteratur


- *J. Phys. Chem. B,* 2010, vol. 114, 6872-6877
- **CASSEL et al.** Original synthesis of linear, branched and cyclic oligoglycerol Standards. *J. Org. Chem.,* 2001, 875-896